(19) Europäisches Patentamt
European Patent Office
Office européen des brevets

(11) Veröffentlichungsnummer: **0 002 062**
**B1**

(12) **EUROPÄISCHE PATENTSCHRIFT**

(45) Veröffentlichungstag der Patentschrift: **05.05.82**

(51) Int. Cl.³: **C 07 F 9/65,** C 07 F 9/15, C 07 F 9/10

(21) Anmeldenummer: **78101389.1**

(22) Anmeldetag: **17.11.78**

# (54) Phosphororganische Ringverbindungen, Verfahren zu ihrer Herstellung und ihre Verwendung.

(30) Priorität: **22.11.77 DE 2752125**

(43) Veröffentlichungstag der Anmeldung: **30.05.79 Patentblatt 79/11**

(45) Bekanntmachung des Hinweises auf die Patenterteilung: **05.05.82 Patentblatt 82/18**

(84) Benannte Vertragsstaaten: **BE CH FR GB LU NL SE**

(56) Entgegenhaltungen:
**DE-A-2 327 185**
**DE-A-2 437 832**
**DE-B-1 008 746**
**GB-A-762 147**
**US-A-2 960 528**
**US-A-3 795 612**

(73) Patentinhaber: **Max-Planck-Gesellschaft zur Förderung der Wissenschaften e.V., Bunsenstrasse 10, D-3400 Göttingen (DE)**

(72) Erfinder: **Eibl, Hansjörg, Dr., Steinweg 51, D-3406 Bovenden (DE)**

(74) Vertreter: **Weickmann, Heinrich, Dipl.-Ing. et al, Postfach 860 820 Möhlstrasse 22, D-8000 München 86 (DE)**

EP 0 002 062 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Phosphororganische Ringverbindungen, Verfahren zu ihrer Herstellung und ihre Verwendung

Die Erfindung betrifft phosphororganische Ringverbindungen, ein Verfahren zu ihrer Herstellung und ihre Verwendung zur Herstellung von Kephalinen und Phosphatidylglykol-Verbindungen und deren Analogen durch Ringspaltung. Durch Ringöffnung am Sauerstoffatom können dabei auch ganz neuartige Phospholipide erhalten werden.

Nach den bisher bekannten Verfahren zur Herstellung von Phospholipiden liess sich die Kephalinreihe mit den niedrigsten Ausbeuten erhalten. Bei der Kephalinbildung muss eine Veresterung des Äthanolamins an der Hydroxylgruppe erfolgen, was bisher stets die Verwendung einer Schutzgruppe an der Aminogruppe erforderte, die später wieder abgespaltet wird. Hierdurch wurde nicht nur die Zahl der erforderlichen Arbeitsschritte erhöht, sondern auch die Ausbeute erheblich verringert.

Th. Bersin et al. (Hoppe-Seylers, Zeitschrift für physiologische Chemie, 269, S. 250/251) beschrieben bereits das Äthanolaminphosphorylchlorid, eine cyclische Verbindung, die durch Umsetzung von Äthanolaminhydrochlorid mit Phosphoroxychlorid gebildet wurde. Bei der Ringspaltung bildete sich jedoch nicht das gesuchte Phosphatid, sondern eine stickstofffreie Substanz, die als Pyrophosphorsäureester eines Acetals identifiziert wurde.

Aus der GB-PS 762 147 sind 1,3,2-Dioxaphosphorinane bekannt, die vier Sauerstoffatome aufweisen, die direkt mit dem Phosphoratom des Ringes verbunden sind. Diese heterocyclischen Verbindungen sind als Lösungsmittel und Weichmacher für Harzmassen beschrieben und besitzen auch insektizide und fungizide Wirkungen.

In der US-PS 3 795 612 sind ebenfalls cyclische organische Phosphorverbindungen beschrieben, die in ihrem heterocyclischen Ring Stickstoffatome und Sauerstoffatome aufweisen können, jedoch dann kein 2-Oxo-Sauerstoffatom besitzen. Es ist angegeben, dass diese phosphororganischen Verbindungen ausgezeichnete Antioxidanseigenschaften aufweisen und in Schmierölen verwendet werden können.

Schliesslich offenbart die DE-AS 1 008 746 1,3,2-Dioxaphosphorilane bzw. -phosphorinane, d.h. Verbindungen, die in dem heterocyclischen Ring jeweils zwei Sauerstoffatome aufweisen.

Der Erfindung liegt nun die Aufgabe zugrunde, cyclische organische Phosphorylverbindungen anzugeben, die sich in einfacher Weise in Phospholipide überführen lassen, ohne dass hierzu Schutzgruppen verwendet werden müssen.

Es wurde überraschenderweise eine neue Klasse von solchen cyclischen Phosphorylverbindungen gefunden, die sich einfach und quantitativ zu Phospholipiden spalten lassen.

Gegenstand der Erfindung sind daher die phosphororganischen Verbindungen der Formel

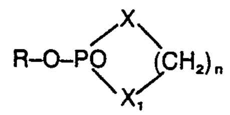

(I)

worin

R den Rest eines ein- oder mehrwertigen, primären oder sekundären aliphatischen Alkohols bedeutet, welcher halogeniert sein kann und/oder eine oder mehrere aliphatische Ester- oder Äthergruppen mit 1 bis 26 C-Atomen in der Seitenkette aufweist, die auch Kohlenstoff-Kohlenstoff-Mehrfachbindungen enthalten können, wobei der Rest R insgesamt wenigstens 6 C-Atome enthält, wenn er sich von einem einwertigen Alkohol ableitet und wenigstens 3 C-Atome, wenn er sich von einem mehrwertigen Alkohol ableitet,

X und $X_1$ unabhängig voneinander je ein Sauerstoffatom, die Gruppe NH oder N-Niedrigalkyl mit 1 bis 6 C-Atomen, wobei X und $X_1$ nicht gleichzeitig Sauerstoffatome darstellen, und

n die Zahl 2, 3 oder 4 bedeuten.

Beispiele für Reste R sind nachfolgend zusammengestellt. Zur besseren Übersicht sind die Beispiele in Gruppen unterteilt. Gruppe A umfasst Reste einwertiger Alkohole, wie Hexanol, Dekanol, Hexadekanol, Eicosanol und Hexeicosanol sowie Cyclohexanol und entsprechende Verbindungen, die halogeniert sind, wie Bromhexanol-(1), 10-Bromdekanol-(1) und 16-Bromhexadekanol-(1), oder ungesättigt sind, wie 9-Octadecenol-(1). Sie lassen sich durch Umsetzung mit Phosphoroxychlorid in Verbindungen der Formel II überführen.

Gruppe B beinhaltet Reste von Verbindungen, die durch Monosubstitution von Alkandiolen unter Verätherung oder Veresterung entstanden sind, wie Acetylglykol, Äthylglykol, Dekanoylglykol, Decylglykol, Hexadekanoylglykol, Hexadecylglykol, Eicosanoylglykol, Eisosylglykol und entsprechende Monoacyl- oder Monoalkyl-derivate von Propandiol-(1,3), Propandiol-(1,2), Hexandiol-(1,6), Dekandiol-(1,10) und Hexadekandiol-(1,16), die ebenso wie die Glykolderivate auf bekannte Weise dargestellt werden können.

Gruppe C umfasst Reste von Verbindungen, die ebenfalls auf Alkandiolen aufgebaut sind, die aber säurelabile Äthergruppierungen, wie den Trityl- oder Tetrahydropyranolrest enthalten:
1-Tritylglykol, 1-Tetrahydropyranylglykol,
1-Tritylpropandiol-(1,3),
1-Tetrahydropyranyl-propandiol-(1,3),
1-Tritylhexandiol-(1,6),
1-Tetrahydropyranyl-hexandiol-(1,6),
1-Trityldekandiol-(1,10),
1-Tetrahydropyranyl-dekandiol-(1,10) sowie
1-Tritylhexadekanol-(1,16) und
1-Tetrahydropyranyl-hexadekanol-(1,16).
Auch diese Verbindungen können auf bekannte Weise dargestellt werden.

Gruppe D umfasst ebenfalls Reste von Verbindungen, die auf Alkandiolen aufgebaut sind, die aber Äthergruppierungen enthalten, die durch katalytische Hydrogenolyse wieder entfernt werden können, beispielsweise Benzyläther:
1-Benzylglykol,
1-Benzylpropandiol-(1,3),
1-Benzylpropandiol-(1,2),
1-Benzylhexandiol-(1,6),
1-Benzyldekandiol-(1,10),
1-Benzylhedekandiol-(1,16).
Auch diese Verbindungen können auf bekannte Weise hergestellt werden.

Gruppe E umfasst Reste von Verbindungen, die auf dem Glyceringrundgerüst aufgebaut sind und zwei Alkoholfunktionen wie bei Gruppe B substituiert haben, wie Reste von
1,2-Dimethylglycerin,
1,3-Dimethylglycerin,
1,2-Diacetylglycerin,
1,3-Diacetylglycerin und
1,2-Diäthylglycerin
1,3-Diäthylglycerin
sowie entsprechende Ester mit höheren Fettsäureestern, wie Caprinsäure, Laurinsäure, Palmitinsäure, Arachinsäure, Ölsäure und Linolsäure, oder Äther mit höheren Alkylresten, wie Decyl-, Hexadecyl-, Hexacosyl- sowie die gemischten Ester, Äther oder Ester-Äther-Verbindungen. Die entsprechenden Ausgangsprodukte sind nach bekannten Verfahren herstellbar.

Gruppe F umfasst Reste von Glycerinderivaten, die säurelabile Gruppen, wie Ditritylreste, also z.B. 1,3-Ditritylglycerin oder 1,2-Isopropylidenglycerin, enthalten.

Gruppe G umfasst Reste von Verbindungen, die auf Glycerin aufgebaut sind, die aber, wie bei Gruppe D, Äthergruppierungen enthalten, die durch katalytische Hydrogenolyse wieder entfernt werden können, beispielsweise Benzyläther:
1-Benzyl-2-lauroyl-glycerin,
1-Lauroyl-2-benzyl-glycerin,
1-Benzyl-2-palmitoyl-glycerin,
1-Palmitoyl-2-benzyl-glycerin,
1-Benzyl-2-arachoyl-glycerin,
1-Arachoyl-2-benzyl-glycerin
sowie die entsprechenden Alkyläther.

Gruppe H umfasst Reste von Verbindungen des Typs B und E, jedoch mit Polyalkoholen als Grundgerüst. Ein n-Polyol enthält dabei stets n-1-Substituenten und eine freie Hydroxylgruppe, die dann mit Phosphoroxychlorid umgesetzt werden kann. Beispiele für geeignete Polyalkohole sind Erythrit, Arabit, Xylit und Adonit, Mannit, Sorbit und Dulzit.

Gruppe I besteht aus Resten von Verbindungen des Typs C und F auf Basis von Polyalkoholen, die wieder säurelabil sind. Dabei sind in einem n-Polyol n-1-Gruppen geschützt, d.h. eine freie primäre oder sekundäre Alkoholgruppe ist vorhanden, die wieder zur Umsetzung mit Phosphoroxychlorid zur Verfügung steht.

Gruppe J umfasst Reste von Verbindungen des Typs D und G, die Äthergruppierungen enthalten, die durch katalytische Hydrogenolyse wieder entfernt werden können.

Gruppe K umfasst sonstige biologisch und pharmazeutisch interessante Alkohole, die eine primäre oder sekundäre Hydroxylgruppe enthalten, wie Cholesterin, Retinol, Androsteron, Ergosteron, und andere Steroidalkohole, Isoprenoidalkohole und Carotenoidalkohole.

Das erfindungsgemässe Verfahren zur Herstellung der Verbindungen der Formel I ist dadurch gekennzeichnet, dass eine Verbindung der Formel

$$R\text{–}O\text{–}POCl_2 \qquad (II)$$

worin der Rest R die obige Bedeutung besitzt, jedoch keine freien OH-Gruppen aufweist, mit einer Verbindung der Formel

$$R''X\text{–}(CH_2)_n\text{–}X_1\text{–}R'' \qquad (III)$$

in der R'', jeweils ein Wasserstoffatom oder, wenn X bzw. $X_1$ nicht Sauerstoff sind, auch einen Alkylrest mit 1 bis 6 C-Atomen bedeuten können, und X und $X_1$ die obige Bedeutung besitzen, umgesetzt wird.

Die in der DE-AS 1 008 746 bzw. der US-PS 3 795 612 zur Herstellung der beschriebenen phosphororganischen Verbindungen angegebene Verfahrensweise umfasst die Umsetzung eines Alkandiols mit Phosphoroxidchlorid. Hierdurch wird dem Fachmann aber lediglich der Weg gewiesen, zur Herstellung der erfindungsgemässen Verbindungen der allgemeinen Formel I ein Äthanolamin oder ein Äthylendiamin mit Phosphoroxidchlorid umzusetzen, was aber nicht zu den gewünschten Verbindungen führen dürfte, wie es die Th. Bersin et al. (Lock. Cit.) erkennen lassen. Dort ist angegeben, dass man durch Umsetzen von Äthanolamin-Hydrochlorid mit Phosphoroxidchlorid Äthanolaminphosphorylchlorid erhält, eine Verbindung, die bei der Ringspaltung nicht das gewünschte Phosphatid liefert, sondern eine stickstofffreie Substanz, die als Pyrophosphorsäureester eines Acetals identifiziert wurde.

Geeignete Lösungsmittel sind in erster Linie solche, die Verbindungen der allgemeinen Formeln II und III in vernünftigen Mengen gut lösen, in denen aber anderseits das bei der Reaktion gebildete Hydrochlorid der tertiären Base unlöslich ist. Auf diese Weise können die Hydrochloride der verwendeten Basen leicht entfernt und über ihre Menge die Vollständigkeit der Reaktion überprüft werden. Pro Mol der Ringverbindungen entstehen zwei Mol an Hydrochlorid der tertiären Base. Bevorzugt werden deshalb Toluol, Benzol, Hexan, Tetrahydrofuran, Dioxan, Diäthyläther und Diisopropyläther sowie Gemische davon verwendet, da diese Lösungsmittel beide genannten Kriterien erfüllen. Es finden aber auch Lösungsmittel wie Trichloräthylen, Methylchlorid, Tetrachlorkohlenstoff und Chloroform Verwendung, die jedoch das anfallende Hydrochlorid der tertiären Base zum Teil in beträchtlicher Menge lösen.

Die Umsetzung wird zweckmässig in einem molaren Verhältnis von 1 : 1 bis 1 : 1,5 in einem geeigneten Lösungsmittel oder Lösungsmittelgemisch durchgeführt bei einer Temperatur, die durch den Siedepunkt und den Gefrierpunkt des betreffenden Lösungsmittels begrenzt ist. Das

Produkt wird normalerweise nach 0,5 bis 6 Stunden isoliert und, wenn nötig, gereinigt.

Die Umsetzung erfolgt vorzugsweise in Gegenwart eines oder mehrerer basischer Amine als Katalysatoren. Geeignet sind tertiäre aliphatische oder aromatische Amine, die in einem molaren Verhältnis Verbindung II : Amin wie 1 : 3 bis 1 : 6 eingesetzt, also im Überschuss zugesetzt werden. Bevorzugt verwendete Basen sind Trimethylamin, Triäthylamin und Pyridin, da hier überschüssige Base leicht im Wasserstrahlvakuum entfernt werden kann. Es finden z.B. aber auch Tripropylamin und Tributylamin sowie Chinolin Verwendung. Hier sind jedoch die Hydrochloride besser löslich und die höheren Siedepunkte erschweren die Entfernung der überschüssigen Base.

Da die Reaktion zwischen den Verbindungen der allgemeinen Formeln II und III sehr rasch abläuft, empfiehlt es sich, bei Beginn der Reaktion zu kühlen. Bevorzugt wird die Reaktion bei 0 bis 10°C begonnen, nach 15 bis 60 Minuten wird das Reaktionsgemisch auf 30 bis 60°C erhitzt und nach 2 bis 10 Stunden aufgearbeitet. Es können aber auch höhere Temperaturen angewendet werden, ebenso wie noch niedrigere Temperaturen, soweit bei den verwendeten Lösungsmitteln dann noch eine ausreichende Löslichkeit der verschiedenen Komponenten vorliegt.

Die Verbindungen der allgemeinen Formeln II und III werden miteinander in einem molaren Verhältnis von II : III wie 1 : 1 bis 1 : 1,5 umgesetzt. Bevorzugt wird ein leichter Überschuss von III gegenüber II, also etwa 1 : 1,1. Üblicherweise führt ein Überschuss an III nicht zu störenden Nebenreaktionen, er garantiert aber die vollständige Umsetzung von II.

Aufgrund des überraschend glatten Ablaufs des erfindungsgemässen Verfahrens bilden sich praktisch keine Nebenprodukte und die Verbindungen der Formel I fallen in hoher Reinheit an. In vielen Fällen lassen sie sich leicht kristallisieren. Dabei werden bevorzugt Lösungsmittel wie Alkane oder Diisopropyläther verwendet, die die Verbindungen bei Siedetemperatur gut lösen, bei 0°C aber kaum. Auch Lösungsmittel, wie Aceton, Methyläthylketon und auch Acetonitril finden Verwendung.

Besonders stabil sind die 6gliedrigen Ringe, sowohl die stickstoffhaltigen als auch die stickstofffreien Ringe. Bei den 5gliedrigen Ringen sind diejenigen, die wenigstens einen Stickstoff im Ring enthalten, ebenfalls sehr stabil und lassen sich daher nicht nur gut isolieren, sondern auch einfach umkristallisieren und reinigen. Die stickstofffreien 5gliedrigen Ringe hingegen sind hydrolyseempfindlich und werden daher zweckmässig unter strengem Wasserausschluss hergestellt und aufbewahrt. Unter der Voraussetzung des Wasserausschlusses sind sie ebenfalls stabil.

Die erfindungsgemässen neuen Verbindungen stellen wertvolle Zwischenprodukte für die Herstellung von Phospholipiden, insbesondere von Kephalinen und Phosphatidylglykol-Verbindungen sowie deren Analogen dar. Sie ermöglichen die Gewinnung derartiger Phospholipide in besonders einfacher Weise mit überlegener Reinheit und ermöglichen insbesondere die Herstellung derartiger Verbindungen ohne Verwendung von Schutzgruppen mit praktisch quantitativen Ausbeuten. Neben der überraschend einfachen Reaktionsführung, die experimentell keinerlei Schwierigkeiten bereitet, ist auch die Vielzahl der herstellbaren Verbindungen, die teilweise erst mit Hilfe der erfindungsgemässen Verbindungen zugänglich werden, bestechend. Infolge der hohen Reinheit, mit der die Phospholipide erhalten werden können, erübrigt sich in aller Regel eine chromatographische Reinigung der Endprodukte.

Die Spaltung der erfindungsgemässen Verbindungen der allgemeinen Formel I zu den erwähnten Phospholipiden erfolgt äusserst einfach durch Hydrolyse unter Protonen- oder Hydroxylionenkatalyse. Zur Durchführung der Hydrolyse wird die ringförmige Verbindung der allgemeinen Formel I zweckmässig in einer Konzentration von 0,1 bis 1 M in solchen organischen Lösungsmitteln aufgenommen, die mit Wasser zumindest teilweise mischbar sind. Gut bewährt haben sich Lösungsmittel wie 2-Propanol, 2-Butanol, Tetrahydrofuran oder Dioxan, aus denen die Spaltprodukte oft kristallin und rein anfallen. Es wurden aber auch Methanol, Äthanol, Propanol oder Methoxyäthanol verwendet. Auch Mischungen können vorteilhaft sein, beispielsweise von Chloroform mit Methanol, Äthanol oder 2-Propanol. Dabei wird der zugesetzte Wasseranteil so berechnet, dass die Mischung einphasig bleibt. Auf sekundäre Alkohole, wie 2-Propanol, 2-Butanol oder 2-Pentanol wird als Lösungsmittel besonders dann zurückgegriffen, wenn die zu hydrolysierenden Ringverbindungen Fettsäureester mit sekundären Alkoholfunktionen enthalten, die sonst – beispielsweise besonders mit Methanol – leicht unter Umesterung zersetzt werden.

Den nicht wässrigen Lösungen der Ringverbindungen setzt man dann Säure oder Lauge zu, um die Hydrolyse einzuleiten. Als Säuren haben sich besonders wässrige Ameisensäure, Essigsäure, Salzsäure oder Borsäure in Konzentrationen von 0,1 bis 5 M bewährt. Die Spaltung wurde aber auch erreicht durch Einleiten von gasförmigem $CO_2$ in eine Lösung der Ringverbindung in 2-Propanol und Wasser. Wesentlich für die Hydrolyse ist, dass der pH-Wert der Reaktionslösung zwischen 2 und 6 liegt. Dann wird in jedem Fall der Ring so gespalten, dass sich ein Ester bildet, der endständig eine substituierte oder unsubstituierte Aminogruppe trägt. Die Spaltgeschwindigkeit hängt dabei direkt von der Protonenkonzentration bzw. -aktivität ab. So ist unter Verwendung von Salzsäure die Hydrolyse nach etwa 10 Minuten beendet, mit Borsäure sind etwa 2 Stunden notwendig. Die Spaltung verläuft dabei quantitativ in der angegebenen Richtung ohne Bildung von verunreinigenden Nebenprodukten. Als besonders günstig erwies sich die Verwendung von 20%iger Essigsäure im Volumenverhältnis 1 : 1 mit Isopropanol als organisches Lösungsmittel.

Für Phosphorinane, also für 6-Ringe, nimmt allerdings die Hydrolyse mehr Zeit in Anspruch, da

diese Ringe stabiler sind. Je nach pH-Wert kann die Reaktionszeit bis zur vollständigen Spaltung der Ringverbindungen zwischen 2 und 24 Stunden variieren. Die Reaktionszeiten können hier abgekürzt werden durch Erhöhen der Temperatur bis zum Siedepunkt der verwendeten Lösungsmittelgemische.

Für die alkalische Spaltung werden die gleichen Lösungsmittel wie für die saure Spaltung verwendet. Als wässrige Phase werden bevorzugt schwach alkalische Carbonate verwendet, besonders bevorzugt 0,1 bis 2 M Natriumcarbonatlösung. Wesentlich für die Hydrolyse ist, dass der pH-Wert der Lösung über 8 liegt, um eine Ringöffnung am Sauerstoff zu erhalten. Dann bildet sich bei der alkalisch katalysierten Spaltung ein Phosphorsäureamid, falls eine der Gruppe X und $X_1$ ein Stickstoffatom enthält. Wird daher beispielsweise als Verbindung der allgemeinen Formel III Äthanolamin verwendet, so bildet sich bei der alkalischen Spaltung endständig eine OH-Gruppe, bei der sauren Spaltung endständig die Aminogruppe. Bei den Verbindungen mit endständiger OH-Gruppe, die durch die alkalische Hydrolyse erhalten werden, handelt es sich um eine neue Klasse von Phospholipiden, die besonders gute Emulgatoren darstellen.

Die erfindungsgemässen Verbindungen sind phosphororganische Ringverbindungen, die, je nach Struktur, unterschiedlich rasch durch einfache Addition von einem Molekül Wasser in Phospholipide übergehen können; es sind innere Phosphorsäureesteramide im Falle des Anhydro-kephalins, innere Phosphorsäurediester bei Anhydro-phosphatidylglykol und innere Phosphorsäurediamide bei den N,N-Ringen. Aufgrund ihrer besonderen Struktur und der im Vergleich zu den Phospholipiden ausgezeichneten Löslichkeit in Ölen, Fetten oder Petroläther kann erwartet werden, dass diese Moleküle besonders rasch und sehr effektiv resorbiert werden. Es können experimentell solche Verbindungen ausgewählt werden, die Wasser sehr langsam addieren, die also resorbiert werden, bevor die Umwandlung zum Phospholipid erfolgt. Bei oraler Gabe kann man somit erreichen, dass die Verbindungen als Ring resorbiert und in der Blutbahn oder Zellmembran zu Phospholipiden hydrolysiert werden. Die Verbindungen sind ideale Transportmittel zur Applikation von Arzneimitteln, da die Ringverbindungen nach der Resorption in natürliche Phospholipide übergehen. Natürlich bietet sich hier auch die Möglichkeit, durch orale Gabe von Anhydro-kephalinen oder Anhydro-phosphatidylglykolen den Phospholipidspiegel im Serum massiv zu beeinflussen. Es kann auch daran gedacht werden, die genannten Verbindungen als Plasmaersatzstoffe zu verwenden. Bei der Verwendung der Verbindungen als Transportvesikel zur Verbesserung der Resorption von pharmazeutisch aktiven Substanzen oder von Proteinen ist eine weitere Eigenschaften dieser Verbindungen interessant. Als Anhydro-phospholipide gehen diese Verbindungen nach Wasseraufnahme in Phospholipide über, die ja die Fähigkeit zur Selbstorganisation besitzen und sich aus diesem Grunde in Form von Vesikeln anordnen, die weiter als Transportvesikel für pharmazeutisch aktive Substanzen wirken können (Mikroverkapselung von Pharmaka).

Besondere Bedeutung haben die Lecithine und Kephaline kürzlich erlangt, da festgestellt wurde, dass sie bei der Zelloxidation und anderen Zellvorgängen wichtige Funktionen ausüben. Die Funktion der Phospholipide im Zellstoffwechsel ist noch wenig aufgeklärt und deshalb besonders schwierig, da die isolierten Verbindungen nur in geringen Mengen erhalten werden und ihre Synthese mit grossen Schwierigkeiten verbunden ist. Die Synthese von Phospholipiden verläuft oft vielstufig und man erhält die gewünschten Produkte nur mit geringen Ausbeuten [vgl. A.J. Slotbohm und P.P.M. Bonsen, Chem. Phys. Lipids (1970) S. 301].

Lecithin und Kephalin werden aus Naturprodukten, z.B. aus Eigelb, Hirnsubstanz, Rückenmark und Sojabohnen, gewonnen. Die Handelsprodukte besitzen sehr unterschiedliche Eigenschaften und dadurch wird der Einsatz des Lecithins und Kephalins bei den verschiedenen Anwendungen oft durch den unterschiedlichen Gehalt an Phospholipiden schwierig.

Der Erfindung liegt auch die Aufgabe zugrunde, ein Syntheseverfahren für Phospholipide zu schaffen, das einfach und leicht durchzuführen ist, ohne dass teure Ausgangsmaterialien eingesetzt werden müssen. Mit den erfindungsgemässen Verbindungen können daher neue Verbindungen geschaffen werden, die ähnlich wie die natürlich vorkommenden Phospholipide gebaut sind und durch eine Kombination von lipophilen und hydrophilen sowie von sauren und basischen Gruppen im gleichen Molekül ähnliche oder bessere Eigenschaften wie die natürlich vorkommenden Phospholipide besitzen.

Besonders interessant ist die Verwendung der neuen phosphororganischen Ringverbindungen zur Herstellung von Verbindungen, die in der Natur nicht vorkommen, beispielsweise Phospholipide, die durch alkalische Hydrolyse von Oxaza-1,3,2-phospholanen entstehen. Das ist eine neue Klasse von Phospholipiden mit ausgezeichneten Emulgatoreigenschaften. Interessant ist besonders, dass die veränderte Struktur – Phosphorsäureamid statt Phosphorsäureester – zu einer veränderten Reaktivität gegenüber Phospholipasen führt. Entsprechende Beobachtungen gelten für Diaza-1,3,2-phospholane und -phosphorinane.

Die genannte Verwendung ermöglicht in der Kephalin-Lecithin-Reihe die Darstellung aller Vertreter unterschiedlichen Methylierungsgrades. Kephaline und N-Methyl-kephaline werden dabei direkt über N,O-Ringverbindungen durch anschliessende Hydrolyse erhalten. N,N-Dimethylkephaline und Lecithine werden über die β-Bromäthylester synthetisiert, die durch Natriumbromidöffnung von O,O-Ringen zugänglich sind. Die Überführung der β-Bromäthylester in N,N-Dimethylkephaline und Lecithine ist bekannt.

Die genannten Verfahren bieten elegante Möglichkeiten zur Darstellung isotopenmarkierter Verbindungen in hohen Ausbeuten.

Die folgenden Beispiele erläutern die Erfindung weiter. Sie sind eingeteilt nach Darstellungsverfahren, die allgemein gelten, jedoch für ein spezielles Beispiel ausgeführt sind; die Beispiele sind aufgrund der chemischen Struktur von R in die Gruppen A bis K unterteilt.

Eine weitere Unterteilung erfolgt nach den Reaktionsbedingungen: I für Umsetzungen der Aminoalkohole, II der Diamine, III der Diole mit Monoalkyl-phosphorsäuredichloriden; IV Darstellung der Monoalkyl-phosphorsäuredichloride aus sekundären Alkoholfunktionen, V aus Verbindungen mit säurelabilen Schutzgruppen und VI aus primären Alkoholen in direkter Nachbarschaft zu einem Fettsäureester mit sekundärem Alkohol.

Gruppe A

Verfahren I für Umsetzungen mit Aminoäthanol, Aminopropanol oder Aminobutanol sowie den entsprechenden N-Alkylverbindungen:

a) 10 ml Toluol werden mit 6,6 g $POCl_3$ (0,044 Mol) versetzt. Unter Rühren werden bei 0 bis 5°C 6,3 g Dekanol (0,04 Mol) in 40 ml Tetrahydrofuran und 9 g Triäthylamin (0,09 Mol) zugegeben. Mit 10 ml Tetrahydrofuran wird nachgespült. Die Reaktion ist nach 30 Minuten vollständig. Man versetzt das Reaktionsgemisch nun mit 2,9 g (0,048 Mol) Äthanolamin in 40 ml Tetrahydrofuran und 12 g Triäthylamin (0,12 Mol) und wäscht mit 10 ml Tetrahydrofuran nach. Nach 30 Minuten bei 20°C ist die Reaktion vollständig abgelaufen (Dünnschichtchromatographie!). Bei 20°C wird vom Niederschlag (Triäthylaminhydrochlorid) abgesaugt, das Filtrat eingeengt und der Rückstand umkristallisiert oder auch direkt weiterverarbeitet (siehe Ringöffnung).

b) Zu 10 ml Trichloräthylen werden 6,6 g $POCl_3$ (0,044 Mol) gegeben. Unter starkem Rühren bei 0 bis 5°C versetzt man mit einer Lösung von 9,7 g Hexadekanol (0,04 Mol) in 40 ml Trichloräthylen und 7 g Pyridin (0,09 Mol). Man spült mit 10 ml Trichloräthylen nach und erwärmt 20 Minuten auf 20°C, wonach die Reaktion vollständig ist (Dünnschichtchromatographie!). Man kühlt das Reaktionsgemisch mit einem Wasserbad auf 10°C und versetzt mit 2,9 g Äthanolamin (0,048 Mol) in 75 ml Tetrahydrofuran und 12 g Pyridin (0,15 Mol). Mit 25 ml Tetrahydrofuran wird nachgewaschen. Man erwärmt zunächst 20 Minuten auf 20°C, dann 20 Minuten auf 35°C, wonach die Reaktion vollständig abgelaufen ist (Dünnschichtchromatographie!). Man saugt bei 20°C vom Niederschlag (Pyridinhydrochlorid) ab, engt das Filtrat im Vakuum ein und kristallisiert den Rückstand aus Hexan um oder verarbeitet ihn direkt weiter (siehe Ringöffnung).

Verfahren II für Umsetzungen mit Diaminoäthan, 1,3-Diaminopropan oder 1,4-Diaminobutan sowie den entsprechenden N-Alkylverbindungen:

Zu 10 ml Tetrachlorkohlenstoff werden 6,6 g Phosphoroxychlorid (0,044 Mol) gegeben. Das Phosphorylierungsgemisch wird bei 20°C unter Rühren mit 11,9 g Eicosanol (0,04 Mol), gelöst in 40 ml Dioxan und 12 g Triäthylamin (0,12 Mol), versetzt. Mit 10 ml Dioxan wird nachgewaschen. Man erwärmt für 30 Minuten auf 30°C und kühlt dann mit einem Wasserbad auf 10°C. Man versetzt das Reaktionsgemisch mit 2,9 g 1,2-Diaminoäthan (0,048 Mol) in 40 ml Dioxan und 13 g Triäthylamin (0,013 Mol). Mit 10 ml Dioxan wird nachgewaschen und das Reaktionsgemisch für 60 Minuten auf 30°C erwärmt. Man saugt vom Niederschlag ab (Triäthylaminhydrochlorid), engt das Filtrat ein und kristallisiert um oder verwendet den Rückstand direkt weiter (siehe Ringöffnung).

Verfahren III für Umsetzungen mit Glykol, Propandiol-(1,3) oder Butandiol-(1,4):

Zu 10 ml Diisopropyläther werden 6,6 g $POCl_3$ (0,044 Mol) gegeben. Das Phosphorylierungsgemisch wird unter Rühren bei 20°C mit 10,8 g Octadekanol (0,04 Mol) in 40 ml Äthylmethylketon und 12 g Triäthylamin (0,12 Mol) versetzt. Man spült mit 10 ml Äthylmethylketon nach. Die Reaktion ist nach 30 Minuten vollständig. Man versetzt nun das Reaktionsgemisch mit 3,0 g Glykol (0,048 Mol), gelöst in 40 ml Äthylmethylketon und 13 g Triäthylamin (0,13 Mol) und erwärmt auf 40°C. Nach 60 Minuten ist die Reaktion abgeschlossen. Man entfernt das ausgefallene Triäthylaminhydrochlorid durch Absaugen und engt das Filtrat ein. Der Rückstand wird umkristallisiert oder auch direkt weiter umgesetzt (siehe Ringöffnung).

Beispiele für Gruppe A

Primäre Alkohole werden nach den Verfahren I bis III umgesetzt; sekundäre Alkohole nach dem Verfahren IV (unter Gruppe B beschrieben).

Nach I)

1. 2-Decyloxy-2-oxo-1,3,2-oxaza-phospholan (aus der Reaktion von Decylphosphorsäuredichlorid mit Äthanolamin);
$C_{12}H_{26}NO_3P$ (263,32)
berechnet:
C 54,74 H 9,95 N 5,32 P 11,76%
gefunden:
C 55,01 H 10,05 N 5,11 P 12,09%

2. 2-Octyloxy-2-oxo-1,3,2-oxaza-phospholan (aus der Reaktion von Octylphosphorsäuredichlorid mit Äthanoldiamin);
$C_{10}H_{22}NO_3P$ (235,27)
Nachweis durch Dünnschichtchromatographie!

3. 2-Hexadecyloxy-2-oxo-1,3,2-oxaza-phospholan
(aus der Reaktion von Hexadecylphosphorsäuredichlorid mit Äthanolamin);
$C_{18}H_{38}NO_3P$ (347,49)
berechnet:
C 62,22 H 11,02 N 4,03 P 8,91%
gefunden:
C 62,10 H 10,99 N 4,11 P 8,85%

4. 2-Hexadecyloxa-2-oxo-1,3,2-ox-(N-methyl)-aza-phospholan
(aus der Reaktion von Hexadecylphosphorsäuredichlorid mit N-Methyl-äthanolamin);
$C_{19}H_{40}NO_3P$ (361,51)

berechnet:
C 63,13 H 11,15 N 3,88 P 8,57%
gefunden:
C 63,31 H 11,30 N 3,68 P 8,31

5. 2-Hexadecyloxy-2-oxo-1,3,2-oxaza-phosphorinan
(aus der Reaktion von Hexadecylphosphorsäuredichlorid mit 3-Aminopropanol);
$C_{19}H_{40}NO_3P$ (361,51)
berechnet:
C 63,13 H 11,15 N 3,88 P 8,57%
gefunden:
C 63,89 H 11,32 N 3,79 P 8,49%

6. 2-Hexadecyloxy-2-oxo-1,3,2-ox-(N-methyl)-aza-phosphorinan
(aus der Reaktion von Hexadecylphosphorsäuredichlorid mit N-Methyl-3-aminopropanol);
$C_{20}H_{42}NO_3P$ (375,54)
berechnet:
C 63,97 H 11,27 N 3,73 P 8,25%
gefunden:
C 63,85 H 11,17 N 3,65 P 8,11%

7. 2-Hexacosyloxy-2-oxo-1,3,2-oxaza-phospholan
(aus der Reaktion von Hexacosylphosphorsäuredichlorid mit Äthanolamin);
$C_{28}H_{58}NO_3P$ (487,76)
Nachweis durch Dünnschichtchromatographie!

Nach II)

8. 2-Eicosyloxy-2-oxo-1,3,2-diaza-phospholan
(aus der Reaktion von Eicosylphosphorsäuredichlorid mit Diaminoäthan);
$C_{22}H_{47}O_2N_2P$ (402,61)
berechnet:
C 65,63 H 11,77 N 6,96 P 7,69%
gefunden:
C 65,29 H 11,75 N 6,87 P 7,40%

9. 2-Hexadecyloxy-2-oxo-1,3,2-diaza-phospholan
(aus der Reaktion von Hexadecylphosphorsäuredichlorid mit Diaminoäthan);
$C_{18}H_{39}O_2N_2P$ (346,50)
berechnet:
C 62,40 H 11,35 N 8,09 P 8,94%
gefunden:
C 61,97 H 11,42 N 8,01 P 8,75%

10. 2-Hexadecyloxy-2-oxo-1,3,2-diaza-phosphorinan
(aus der Reaktion von Hexadecylphosphorsäuredichlorid mit 1,3-Diaminopropan);
$C_{19}H_{41}N_2O_2P$ (360,53)
berechnet:
C 63,30 H 11,46 N 7,77 P 8,59%
gefunden:
C 62,90 H 11,33 N 7,56 P 8,71%

11. 2-(10′-Undecenyl)-oxy-2-oxo-1,3,2-diaza-phospholan
(aus der Reaktion von Undecenylphosphorsäuredichlorid mit Diaminoäthan);
$C_{13}H_{27}H_2O_2P$ (274,35)
Nachweis durch Dünnschichtchromatographie!

Nach III)

12. 2-Octadecyloxy-2-oxo-1,3,2-dioxa-phospholan
(aus der Reaktion von Octadecylphosphorsäuredichlorid mit Glykol);
$C_{20}H_{41}O_4P$ (376,52)
berechnet:
C 63,80 H 10,98 P 8,23%
gefunden:
C 64,15 H 11,05 P 8,26%

13. 2-Hexadecyloxy-2-oxo-1,3,2-dioxa-phospholan
(aus der Reaktion von Hexadecylphosphorsäuredichlorid mit Glykol);
$C_{18}H_{47}O_4P$ (348,47)
Nachweis durch Dünnschichtchromatographie!

14. 2-Tetradecyloxy-2-oxo-1,3,2-dioxa-phospholan
(aus der Reaktion von Tetradecylphosphorsäuredichlorid mit Glykol);
$C_{16}H_{33}O_4P$ (320,42)
Nachweis durch Dünnschichtchromatographie!

15. 2-(16′-Bromhexadecyloxy-2-oxo-1,3,2-dioxa-phospholan
(aus der Reaktion von 16-Bromhexadecylphosphorsäuredichlorid mit Glykol);
$C_{18}H_{36}BrO_4P$ (427,38)
Nachweis durch Dünnschichtchromatographie!

Gruppe B

Die Ausgangsverbindungen – Äther oder Ester von Alkandiolen – sind stabil und werden analog den unter A I bis III beschriebenen Verfahren umgesetzt. Drastischere Reaktionsbedingungen werden aber erforderlich, wenn sekundäre Alkoholfunktionen umgesetzt werden sollen, beispielsweise 1-Palmitoyl-propandiol-(1,2). Für die Phosphorylierung empfiehlt sich dann folgendes Verfahren, das auch Anwendung findet, wenn ein sekundärer Alkohol der Gruppe A umgesetzt werden soll.

Verfahren IV für Phosphorylierungen sekundärer Alkoholfunktionen (siehe auch Verfahren VII) unter Gruppe E, S. 31).

Zu 10 ml Hexan werden 6,6 g $POCl_3$ (0,044 Mol) gegeben. Unter Rühren bei 20°C versetzt man das Phosphorylierungsgemisch mit 12,6 g 1-Palmitoylpropandiol-(1,2) (0,04 Mol). Nach 15 Minuten bei 20°C erwärmt man weitere 30 Minuten auf 40°C, wonach die Reaktion vollständig ist. Nun verfährt man zur Umsetzung mit Aminoalkanolen, Diaminoalkanen oder Alkandiolen wie unter A I bis III beschrieben.

Beispiele für Gruppe B

Nach I)

16. 2-[Palmitoylpropandiol-(1′,3′)]-oxy-2-oxo-1,3,2-oxaza-phospholan
(aus der Reaktion von Palmitoyl-propandiol-(1,3)-phosphorsäuredichlorid mit Äthanolamin);
$C_{21}H_{42}NO_5P$ (419,55)
berechnet:
C 60,12 H 10,09 N 3,34 P 7,38%
gefunden:
C 59,67 H 10,01 N 3,41 P 7,50%

17. 2-[Palmitoylpropandiol-(1′,3′)]-oxy-2-oxo-1,3,2-oxaza-phosphorinan
(aus der Reaktion von Palmitoyl-propandiol-(1,3)-phosphorsäuredichlorid mit 3-Aminopropanol);
$C_{22}H_{44}NO_5P$ (433,58)
berechnet:
C 60,95 H 10,23 N 3,23 P 7,14%
gefunden:
C 60,74 H 10,15 N 3,10 P 7,23%

18. 2-[2'-Palmitoylpropandiol-(1',2')]-oxy-2-oxo-1,3,2-oxaza-phospholan
(aus der Reaktion von 2-Palmitoyl-propandiol-(1,2)-phosphorsäuredichlorid mit Äthanolamin);
$C_{21}H_{42}NO_5P$ (419,55)
Nachweis durch Dünnschichtchromatographie!

19. 2-[1'-Palmitoylpropandiol-(1',2')]-oxy-2-oxo-1,3,2-oxaza-phospholan
(aus der Reaktion von 1-Palmitoylpropandiol-(1,2)-phosphorsäuredichlorid mit Äthanolamin);
$C_{21}H_{42}NO_5P$ (419,55)
Nachweis durch Dünnschichtchromatographie!

20. 2-[Hexyl-dekandiol-(1',10')]-oxy-2-oxo-1,3,2-oxaza-phospholan
(aus der Reaktion von Hexyl-dekandiol-(1,10)-phosphorsäuredichlorid mit Äthanolamin);
$C_{18}H_{38}NO_4P$ (363,49)

Nachweis durch Dünnschichtchromatographie!

21. 2-[Capronoylpropandiol-(1',3')]-oxy-2-oxo-1,3,2-oxaza-phospholan
(aus der Reaktion von Capronoyl-propandiol-(1,3)-phosphorsäuredichlorid mit Äthanolamin);
$C_{11}H_{22}NO_5P$ (272,28)
berechnet:
C 47,31 H 7,94 N 5,02 P 11,09%
gefunden:
C 46,57 H 8,03 N 4,91 P 11,41%

22. 2-[Äthyl-octandiol-(1',8')]-oxy-2-oxo-1,3,2-oxaza-phospholan
(aus der Reaktion von Äthyl-octandiol-(1,8)-phosphorsäuredichlorid mit Äthanolamin);
$C_{12}H_{26}NO_4P$ (279,32)

Nachweis durch Dünnschichtchromatographie!

23. 2-[Methyl-hexadekandiol-(1',16')]-oxy-2-oxo-1,3,2-oxaza-phospholan
(aus der Reaktion von Methyl-hexadekandiol-(1,16)-phosphorsäuredichlorid mit Äthanolamin);
$C_{19}H_{40}NO_4P$ (377,51)
Nachweis durch Dünnschichtchromatographie!

24. 2-[Acetyl-propandiol-(1',3')]-oxy-2-oxo-1,3,2-oxaza-phospholan
(aus der Reaktion von Acetyl-propandiol-(1,3)-phosphorsäuredichlorid mit Äthanolamin);
$C_7H_{14}NO_5P$ (223,17)
berechnet:
C 37,67 H 6,32 N 6,28 P 13,88%
gefunden:
C 37,11 H 6,19 N 6,35 P 14,05%

25. 2-[Tetradecyl-propandiol-(1',3')]-oxy-2-oxo-1,3,2-oxaza-phospholan
(aus der Reaktion von Tetradecyl-propandiol-(1,3)-phosphorsäuredichlorid mit Äthanolamin);
$C_{19}H_{40}NO_4P$ (377,51)
Nachweis durch Dünnschichtchromatographie!

26. 2-[Hexacosyl-propandiol-(1',3')]-oxy-2-oxo-1,3,2-oxaza-phospholan
(aus der Reaktion von Hexacosyl-propandiol-(1,3)-phosphorsäuredichlorid mit Äthanolamin);
$C_{31}H_{62}NO_5P$ (559,82)
Nachweis durch Dünnschichtchromatographie!

27. [Oleoylpropandiol-(1',3')]-oxy-2-oxo-1,3,2-oxaza-phospholan
(aus der Reaktion von Oleoyl-propandiol-(1,3)-phosphorsäuredichlorid mit Äthanolamin);
$C_{23}H_{44}NO_5P$ (445,59)
Nachweis durch Dünnschichtchromatographie!

Nach II)

28. 2-[Palmitoyl-propandiol-(1',3')]-oxo-1,3,2-diaza-phospholan
(aus der Reaktion von Palmitoyl-propandiol-(1,3)-phosphorsäuredichlorid mit Diaminoäthan);
$C_{21}H_{43}N_2O_4P$ (418,56)
berechnet:
C 60,26 H 10,36 N 6,69 P 7,40%
gefunden:
C 59,56 H 10,21 N 6,57 P 7,21%

29. 2-[Palmitoyl-propandiol-(1',3')]-oxy-2-oxo-1,3,2-diaza-phosphorinan
(aus der Reaktion von Palmitoyl-propandiol-(1,3)-phosphorsäuredichlorid mit 1,3-Diaminopropan);
$C_{38}H_{75}N_2O_6P$ (432,59)
Nachweis durch Dünnschichtchromatographie!

Nach III)

30. 2-[Palmitoyl-propandiol-(1',3')]-oxy-2-oxo-dioxa-phospholan
(aus der Reaktion von Palmitoyl-propandiol-(1,3)-phosphorsäuredichlorid mit Glykol);
$C_{21}H_{41}O_6P$ (420,53)
berechnet:
C 59,98 H 9,83 P 7,37%
gefunden:
C 59,33 H 9,75 P 7,14%

31. 2-[Lauroyl-propandiol-(1',3')]-oxy-2-oxo-dioxa-phosphorinan
(aus der Reaktion von Lauroyl-propandiol-(1,3)-phosphorsäuredichlorid mit Propandiol-(1,3);
$C_{18}H_{35}O_6P$ (378,45)

Nachweis durch Dünnschichtchromatographie!

32. 2-[Acetyl-propandiol-(1',3')]-oxy-2-oxo-dioxa-phospholan
(aus der Reaktion von Acetyl-propandiol-(1,3)-phosphorsäuredichlorid mit Glykol;
$C_7H_{13}O_6P$ (224,16)
berechnet:
C 37,51 H 5,85 P 11,82%
gefunden:
C 37,14 H 5,71 P 13,69%

33. 2-[Hexacosyl-propandiol-(1',3')]-oxy-2-oxo-1,3,2-dioxa-phospholan
(aus der Reaktion von Hexacosyl-propandiol-(1,3)-phosphorsäurechlorid mit Glykol);
$C_{31}H_{61}O_6P$ (560,80)
Nachweis durch Dünnschichtchromatographie!

34. 2-[Tetradecyl-propandiol-(1',3')]-oxy-2-oxo-1,3,2-dioxa-phospholan
(aus der Reaktion von Tetradecyl-propandiol-(1,3)-phosphorsäuredichlorid mit Glykol);
$C_{19}H_{39}O_5P$ (378,50)
Nachweis durch Dünnschichtchromatographie!

35. 2-[Äthyl-propandiol-(1′,3′)]-oxy-2-oxo-1,3,2-dioxa-phospholan
(aus der Reaktion von Äthyl-propandiol-(1,3)-phosphorsäuredichlorid mit Glykol);
$C_7H_{15}O_5P$ (210,16)
Nachweis durch Dünnschichtchromatographie!

Gruppe C

Die Ausgangsverbindungen sind säurelabil. Deshalb wird die erste Phosphorylierung sicherheitshalber mit einem Überschuss an Base ausgeführt. Ansonsten sind die unter A I bis III und B IV beschriebenen Bedingungen ausreichend.

Verfahren V für Phosphorylierung von Zwischenverbindungen mit säurelabilen Schutzgruppen:

Zu 10 ml Benzol werden 6,6 g $POCl_3$ (0,044 Mol) gegeben. Man versetzt das Phosphorylierungsgemisch unter Rühren bei 10°C mit Trityl-propandiol-(1,3) (0,04 Mol) in 40 ml Tetrahydrofuran und 16 g Triäthylamin (0,16 Mol). Nach 30 Minuten bei 20°C ist die Reaktion beendet. Es kann nun nach den unter A I bis III beschriebenen Verfahren weitergearbeitet werden.

Beispiele für Gruppe C

Nach I)

36. 2-[Trityl-propandiol-(1′,3′)]-oxy-2-oxo-1,3,2-oxaza-phospholan
(aus der Reaktion von Trityl-propandiol-(1,3)-phosphorsäuredichlorid mit Äthanolamin);
$C_{24}H_{26}NO_4P$ (423,46)
berechnet:
C 68,07 H 6,19 N 3,31 P 7,32%
gefunden:
C 67,73 H 6,01 N 2,97 P 6,90%

37. 2-[Tetrahydropyranyl-propandiol-(1′,3′)]-oxy-2-oxo-oxaza-phospholan
(aus der Reaktion von Tetrahydropyxanyl-propandiol-(1,3)-phosphorsäuredichlorid mit Äthanolamin);
$C_{10}H_{20}NO_5P$ (265,25)
berechnet:
C 45,28 H 7,60 N 5,28 P 11,68%
gefunden:
C 45,23 H 7,82 N 5,20 P 11,57%

38. 2-[Trityl-glykol]-oxy-2-oxo-1,3,2-oxaza-phospholan
(aus der Reaktion von Trityl-glykol-phosphorsäuredichlorid mit Äthanolamin);
$C_{23}H_{24}NO_4P$ (409,43)
Nachweis durch Dünnschichtchromatographie!

39. 2-[Trityl-dekandiol-(1′,10′)]-oxy-2-oxo-1,3,2-oxaza-phospholan
(aus der Reaktion von Trityl-dekandiol-(1,10)-phosphorsäuredichlorid mit Äthanolamin);
$C_{31}H_{40}NO_4P$ (521,64)
Nachweis durch Dünnschichtchromatographie!

Nach II)

40. 2-[Trityl-butandiol-(1′,4′)]-oxy-2-oxo-1,3,2-diaza-phospholan
(aus der Reaktion von Trityl-butandiol-(1,4)-phosphorsäuredichlorid mit Diaminoäthan);
$C_{25}H_{28}N_2O_3P$ (435,49)
berechnet:
C 68,95 H 6,48 N 6,43 P 7,11%
gefunden:
C 68,57 H 6,42 N 6,67 P 7,20%

41. 2-[Tetrahydropyranyl-octandiol-(1′,8′)]-oxy-2-oxo-1,3,2-diaza-phospholan
(aus der Reaktion von Tetrahydropyranyl-octandiol-(1,8)-phosphorsäuredichlorid mit Äthylendiamin);
$C_{15}H_{31}N_2O_4P$ (334,40)
berechnet:
C 53,88 H 9,34 N 8,38 P 9,26%
gefunden:
C 53,25 H 9,21 N 8,27 P 9,01%

Nach III)

42. 2-(Trityl-glykol)-oxy-2-oxo-1,3,2-dioxa-phospholan
(aus der Reaktion von Trityl-glykol-phosphorsäuredichlorid mit Glykol);
$C_{23}H_{23}O_5P$ (410,41)
berechnet:
C 67,31 H 5,65 P 7,55%
gefunden:
C 67,07 H 5,59 P 7,30%

43. 2-[Tetrahydropyranyl-propandiol-(1′,3′)]-oxy-2-oxo-1,3,2-dioxa-phosphorinan
[aus der Reaktion von Tetrahydropyranyl-propandiol-(1,3)-phosphorsäuredichlorid mit Propandiol-(1,3)];
$C_{11}H_{21}O_6P$ (280,26)
berechnet:
C 47,14 H 7,55 P 11,05%
gefunden:
C 46,86 H 7,41 P 10,81%

Gruppe D

Die Benzyläther von Alkandiolen sind stabil und werden analog den unter A I bis III und B IV angegebenen Verfahren umgesetzt.

Beispiele für Gruppe D

Nach I)

44. 2-(Benzyl-glykol)-oxy-2-oxo-1,3,2-oxaza-phospholan
(aus der Reaktion von Benzyl-glykol-phosphorsäuredichlorid mit Äthanolamin);
$C_{11}H_{16}NO_4P$ (257,13)
berechnet:
C 51,36 H 6,27 N 5,45 P 12,04%
gefunden:
C 51,19 H 6,13 N 5,55 P 12,23%

45. 2-[Benzyl-dekandiol-(1′,10′)]-oxy-2-oxo-1,3,2-oxaza-phospholan
(aus der Reaktion von Benzyl-dekandiol-(1,10)-phosphorsäuredichlorid mit Äthanolamin);
$C_{19}H_{32}NO_4P$ (369,45)
berechnet:
C 61,77 H 8,73 N 3,79 P 8,38%
gefunden:
C 61,33 H 8,59 N 3,37 P 8,01%

Gruppe E

Infolge der Instabilität der Fettsäureester in der 2-Position des Glycerinmoleküls ist es empfehlenswert, die erste Phosphorylierung so durchzuführen, dass unmittelbar nach Zugabe des Diacylglycerins die Reaktion abgeschlossen ist. Reaktionszeiten bis zu 60 Minuten sind unbedenklich, da in diesem Zeitraum noch keine Isomerisierung nachgewiesen werden kann. Für Fettsäureester mit sekundären Alkoholfunktionen, die in direkter Nachbarschaft eine primäre Hydroxylgruppe tragen, wird folgende Reaktionsführung empfohlen:

Verfahren VI Phosphorylierung primärer Hydroxylfunktionen in direkter Nachbarschaft zu einem Fettsäureester mit einer sekundären Hydroxylfunktion:

Zu 10 ml Tetrachlorkohlenstoff werden 6,6 g $POCl_3$ (0,044 Mol) gegeben und dieses Gemisch bei 25°C unter Rühren nacheinander mit 20 ml Tetrahydrofuran und 10 g Triäthylamin (0,10 Mol) sowie mit 20,5 g 1,2-Dimyristoyl-glycerin (0,04 Mol) in 40 ml Tetrahydrofuran versetzt. Die Reaktion ist nach 20 Minuten abgeschlossen, (Dünnschichtchromatographie!). Es kann nun nach den unter A I bis III beschriebenen Verfahren weitergearbeitet werden.

Für die Phosphorylierung sekundärer Hydroxylfunktionen (siehe dazu auch Verfahren B IV) wurde hier öfters nach einer Variante gearbeitet, die bei der ersten Phosphorylierung einen 1,5molaren Überschuss an Phosphoroxychlorid verwendet. Das überschüssige Phosphoroxychlorid wird nach der Reaktion nach Zusatz von Toluol im Vakuum abgezogen. Der Überschuss an Phosphoroxychlorid garantiert auch für diese reaktionsträgen, sekundären Alkohole eine vollständige Überführung in das Alkylphosphorsäuredichlorid.

Verfahren VII) Phosphorylierung sekundärer Hydroxylfunktionen (siehe auch unter B, Seite 22).

Zu 10 ml Hexan werden 9,2 g $POCl_3$ (0,06 Mol) gegeben. Das Phosphorylierungsgemisch wird bei 25°C nacheinander mit 20 ml Tetrahydrofuran und 15 g Triäthylamin (0,15 Mol) und 20,5 g 1,3-Dimyristoyl-glycerin (0,04 Mol) in 40 ml Tetrahydrofuran versetzt. Man erwärmt auf 40°C. Die Reaktion ist nach 30 Minuten abgeschlossen. Man saugt bei 20°C ausgeschiedenes Triäthylaminhydrochlorid ab, versetzt das Filtrat mit 40 ml Toluol und entfernt die flüchtigen Bestandteile bei 40°C unter Wasserstrahlvakuum. Der Rückstand wird in Tetrahydrofuran aufgenommen und wie unter A I bis III beschrieben weiter umgesetzt.

Beispiele für Gruppe E
Nach I)

46. 2-(1',2'-Dimyristoyl-sn-glycerin)-oxy-2-oxo-1,3,2-oxaza-phospholan
(aus der Reaktion von 1,2-Dimyristoyl-sn-glycerin-3-phosphorsäuredichlorid mit Äthanolamin);
$C_{33}H_{64}NO_7P$ (617,86)
berechnet:
C 64,15 H 10,44 N 2,27 P 5,01%
gefunden:
C 64,23 H 10,34 N 2,29 P 5,19%

47. 2-(1',3'-Dimyristoyl-glycerin)-oxy-2-oxo-1,3,2-oxaza-phospholan
(aus der Reaktion von 1,3-Dimyristoyl-glycerin-2-phosphorsäuredichlorid mit Äthanolamin);
$C_{33}H_{64}NO_7P$ (617,86)
berechnet:
C 64,15 H 10,44 N 2,27 P 5,01%
gefunden:
C 64,32 H 10,26 N 2,28 P 5,12%

48. 2-(1',2'-Dipalmitoyl-sn-glycerin)-oxy-2-oxo-1,3,2-oxaza-phosphorinan
(aus der Reaktion von 1,2-Dipalmitoyl-sn-glycerin-3-phosphorsäuredichlorid mit 3-Aminopropanol);
$C_{38}H_{74}NO_7P$ (687,99)
berechnet:
C 66,34 H 10,84 N 2,04 P 4,50%
gefunden:
C 66,21 H 10,91 N 1,99 P 4,41%

49. 2-(1',3'-Dipalmitoyl-glycerin)-oxy-2-oxo-1,3,2-oxaza-phosphorinan
(aus der Reaktion von 1,3-Dipalmitoyl-glycerin-2-phosphorsäuredichlorid mit 3-Aminopropanol);
$C_{38}H_{74}NO_7P$ (687,99)
berechnet:
C 66,34 H 10,84 N 2,04 P 4,50%
gefunden:
C 66,15 H 10,79 N 2,02 P 4,53%

50. 2-(1',2'-Dimyristoyl-sn-glycerin)-oxy-2-oxo-1,3,2-oxaza-phosphorepan
(aus der Reaktion von 1,2-Dimyristoyl-sn-glycerin-3-phosphorsäuredichlorid mit 4-Aminobutanol);
$C_{38}H_{68}NO_7P$ (617,86)
berechnet:
C 65,08 H 10,61 N 2,17 P 4,86%
gefunden:
C 64,89 H 10,44 N 2,25 P 4,90%

51. 2-(1'-Palmitoyl-2'-oleoyl-sn-glycerin)-oxy-2-oxo-1,3,2-oxaza-phospholan
(aus der Reaktion von 1-Palmitoyl-2-oleoyl-sn-glycerin-3-phosphorsäuredichlorid mit Äthanolamin);
$C_{39}H_{74}NO_7P$ (700,00)
Nachweis durch Dünnschichtchromatographie!

52. 2-(1',3'-Diacetyl-glycerin)-oxy-2-oxo-1,3,2-oxaza-phospholan
(aus der Reaktion von 1,3-Diacetyl-glycerin-2-phosphorsäuredichlorid mit Äthanolamin);
$C_9H_{18}NO_7P$ (281,21)
berechnet:
C 38,44 H 5,74 N 4,98 P 11,02%
gefunden:
C 38,01 H 5,69 N 4,93 P 10,77

53. 2-(1',2'-Diacetyl-sn-glycerin)-oxy-2-oxo-1,3,2-oxaza-phospholan
(aus der Reaktion von 1,2-Diacetyl-sn-glycerin-3-phosphorsäuredichlorid mit Äthanolamin);
$C_9H_{16}NO_7P$ (281,21)
Nachweis durch Dünnschichtchromatographie!

54. 2-(1,3-Diäthyl-glycerin)-oxy-2-oxo-1,3,2-oxaza-phospholan
(aus der Reaktion von 1,3-Diäthyl-glycerin-2-phosphorsäuredichlorid mit Äthanolamin);
$C_9H_{20}NO_5P$ (253,24)
Nachweis durch Dünnschichtchromatographie!

55. 2-(1',2'-Dicerotoyl-sn-glycerin)-oxy-2-oxo-1,3,2-oxaza-phospholan

(aus der Reaktion von 1,2-Dicerotoyl-sn-glycerin-3-phosphorsäuredichlorid mit Äthanolamin);
$C_{57}H_{112}NO_7P$ (954,51)
Nachweis durch Dünnschichtchromatographie!

56. 2-(1'-Stearoyl-2'-methyl-rac-glycerin)-oxy-2-oxo-1,3,2-oxaza-phospholan
(aus der Reaktion von 1-Stearoyl-2-methyl-rac-glycerin-3-phosphorsäuredichlorid mit Äthanolamin);
$C_{24}H_{48}NO_6P$ (477,63)
Nachweis durch Dünnschichtchromatographie!

57. 2-(1'-Methyl-2'-octadecyl-rac-glycerin)-oxy-2-oxo-1,3,2-oxaza-phospholan
(aus der Reaktion von 1-Methyl-2-octadecyl-rac-glycerin-3-phosphorsäuredichlorid mit Äthanolamin);
$C_{25}H_{50}NO_5P$ (463,65)
Nachweis durch Dünnschichtchromatographie!

58. 2-(1'-Octadecyl-2'-methyl-rac-glycerin)-oxy-2-oxo-1,3,2-oxaza-phospholan
(aus der Reaktion von 1-Octadecyl-2-methyl-rac-glycerin-3-phosphorsäuredichlorid mit Äthanolamin);
$C_{24}H_{50}NO_5P$ (463,65)
Nachweis durch Dünnschichtchromatographie!

59. 2-(1'-Hexadecyl-2'-palmitoyl-rac-glycerin)-oxy-2-oxo-1,3,2-oxaza-phospholan
(aus der Reaktion von 1-Hexadecyl-2-palmitoyl-rac-glycerin-3-phosphorsäuredichlorid mit Äthanolamin);
$C_{37}H_{74}NO_6P$ (659,98)
Nachweis durch Dünnschichtchromatographie!

Nach II)

60. 2-(1',2'-Dipalmitoyl-sn-glycerin-oxy-2-oxo-1,3,2-diaza-phospholan
(aus der Reaktion von 1,2-Dipalmitoylglycerin-3-phosphorsäuredichlorid mit Diaminoäthan);
$C_{37}H_{73}N_2O_6P$ (672,98)
berechnet:
C 66,04 H 10,93 N 4,16 P 4,60%
gefunden:
C 65,55 H 10,86 N 4,11 P 4,83%

61. 2-(1',3'-Dipalmitoyl-glycerin)-oxy-2-oxo-1,3,2-diaza-phospholan
(aus der Reaktion von 1,3-Dipalmitoyl-glycerin-2-phosphorsäuredichlorid mit Diaminoäthan);
$C_{37}H_{73}N_2O_6P$ (672,98)
Nachweis durch Dünnschichtchromatographie!

62. 2-(1',2'-Dipalmitoyl-sn-glycerin)-oxy-2-oxo-1,3,2-diaza-phosphorinan
(aus der Reaktion von 1,2-Dipalmitoyl-sn-glycerin-3-phosphorsäuredichlorid mit 1,3-Diaminopropan);
$C_{38}H_{75}N_2O_6P$ (687,01)
berechnet:
C 66,44 H 11,00 N 4,08 P 4,51%
gefunden:
C 66,01 H 11,07 N 4,12 P 4,62%

63. 2-(1',3'-Dipalmitoyl-glycerin)-oxy-2-oxo-1,3,2-diaza-phosphorinan
(aus der Reaktion von 1,3-Dipalmitoyl-glycerin-2-phosphorsäuredichlorid mit 1,3-Diaminopropan);
$C_{38}H_{75}N_2O_6P$ (687,01)
Nachweis durch Dünnschichtchromatographie!

Nach III)

64. 2-(1',2'-Dimyristoyl-sn-glycerin-oxy-2-oxo-1,3,2-dioxa-phospholan
(aus der Reaktion von 1,2-Dimyristoyl-sn-glycerin-3-phosphorsäuredichlorid mit Glykol);
$C_{33}H_{63}O_8P$ (618,84)
berechnet:
C 64,05 H 10,26 P 5,01%
gefunden:
C 63,67 H 10,13 P 5,16%

65. 2-(1',3'-Dimyristoyl-glycerin)-oxy-2-oxo-1,3,2-dioxa-phospholan
(aus der Reaktion von 1,3-Dipalmitoyl-glycerin-2-phosphorsäuredichlorid mit Glykol);
$C_{33}H_{63}O_8P$ (618,84)
Nachweis durch Dünnschichtchromatographie!

66. 2-(1',2'-Dipalmitoyl-sn-glycerin)-2-oxo-1,3,2-dioxa-phosphorinan
[aus der Reaktion von 1,2-Dipalmitoyl-sn-glycerin-3-phosphorsäuredichlorid mit Propandiol-(1,3)];
$C_{38}H_{74}NO_7P$ (687,99)
Nachweis durch Dünnschichtchromatographie!

67. 2-(1',3'-Dipalmitoyl-glycerin)-oxy-2-oxo-1,3,2-oxaza-phosphorinan
[aus der Reaktion von 1,3-Dipalmitoyl-glycerin-2-phosphorsäuredichlorid mit Propandiol-(1,3)];
$C_{38}H_{74}NO_7P$ (687,99)
Nachweis durch Dünnschichtchromatographie!

68. 2-(1'-Palmitoyl-2'-oleoyl-sn-glycerin)-oxy-2-oxo-1,3,2-oxaza-phospholan
(aus der Reaktion von 1-Palmitoyl-2-oleoyl-sn-glycerin-3-phosphorsäuredichlorid mit Glykol);
$C_{39}H_{73}O_8P$ (700,98)
Nachweis durch Dünnschichtchromatographie!

69. 2-(1',3'-Diacetyl-glycerin)-oxy-2-oxo-1,3,2-oxaza-phospholan
(aus der Reaktion von 1,3-Diacetyl-glycerin-2-phosphorsäuredichlorid mit Glykol);
$C_9H_{15}O_8P$ (282,19)
Nachweis durch Dünnschichtchromatographie!

70. 2-(1',2'-Diacetyl-sn-glycerin)-oxy-2-oxo-1,3,2-oxaza-phospholan
(aus der Reaktion von 1,2-Diacetyl-sn-glycerin-3-phosphorsäuredichlorid mit Glykol);
$C_9H_{15}O_8P$ (282,19)
Nachweis durch Dünnschichtchromatographie!

71. 2-(1',3'-Diäthyl-glycerin)-oxy-2-oxo-1,3,2-oxaza-phospholan
(aus der Reaktion von 1,3-Diäthyl-glycerin-2-phosphorsäuredichlorid mit Glykol);
$C_9H_{19}O_6P$ (254,22)
Nachweis durch Dünnschichtchromatographie!

72. 2-(1',2'-Dicerotoyl-sn-glycerin)-oxy-2-oxo-1,3,2-oxaza-phospholan
(aus der Reaktion von 1,2-Dicerotoyl-sn-glycerin-3-phosphorsäuredichlorid mit Glykol);
$C_{57}H_{111}O_8P$ (955,49)
Nachweis durch Dünnschichtchromatographie!

73. 2-(1'-Stearoyl-2'-methyl-rac-glycerin)-oxy-2-oxo-1,3,2-oxaza-phospholan
(aus der Reaktion von 1-Stearoyl-2-methyl-rac-

glycerin-3-phosphorsäuredichlorid mit Glykol); $C_{24}H_{47}O_7P$ (478,61)
Nachweis durch Dünnschichtchromatographie!

74. 2-(1'-Methyl-2'-octadecyl-rac-glycerin)-oxy-2-oxo-1,3,2-oxaza-phospholan
(aus der Reaktion von 1-Methyl-2-octadecyl-rac-glycerin-3-phosphorsäuredichlorid mit Glykol); $C_{24}H_{49}O_6P$ (464,63)
Nachweis durch Dünnschichtchromatographie!

75. 2-(1'-Octadecyl-2'-methyl-rac-glycerin)-oxy-2-oxo-1,3,2-oxaza-phospholan
(aus der Reaktion von 1-Octadecyl-2-methyl-rac-glycerin-3-phosphorsäuredichlorid mit Glykol); $C_{24}H_{49}O_6P$ (464,63)
Nachweis durch Dünnschichtchromatographie!

76. 2-(1'-Hexadecyl-2'-palmitoyl-rac-glycerin)-oxy-2-oxo-1,3,2-oxaza-phospholan
(aus der Reaktion von 1-Hexadecyl-2-palmitoyl-rac-glycerin-3-phosphorsäuredichlorid mit Glykol); $C_{37}H_{73}O_7P$ (660,96)
Nachweis durch Dünnschichtchromatographie!

Gruppe F

Hier müssen die Vorsichtsmassnahmen wie in Gruppe C beachtet werden. Die Phosphorylierungen werden also nach Vorschrift V mit einem Überschuss an Base durchgeführt (Seite 27). Es können natürlich auch die Reaktionen I bis IV Anwendung finden, wenn dabei nur stets der Überschuss an Base vorhanden ist.

Beispiele für Gruppe F

Nach I)

77. 2-(1',2'-Isopropyliden-rac-glycerin)-oxy-2-oxo-1,3,2-oxaza-phospholan
(aus der Reaktion von 1,2-Isopropyliden-glycerin-3-phosphorsäuredichlorid mit Äthanolamin); $C_8H_{16}NO_5P$ (237,20)

berechnet:
C 40,51 H 6,80 N 5,91 P 13,06%
gefunden:
C 40,32 H 6,68 N 5,77 P 13,01%

78. 2-(1',2'-Hexadecyliden-rac-glycerin)-oxy-2-oxo-1,3,2-oxaza-phospholan
(aus der Reaktion von 1,2-Hexadecyliden-rac-glycerin-3-phosphorsäuredichlorid mit Äthanolamin); $C_{21}H_{42}NO_5P$ (419,55)

berechnet:
C 60,20 N 10,09 N 3,34 P 7,38%
gefunden:
C 60,01 N 9,99 N 3,17 P 7,21%

79. 2-(1',2'-Dipentadecylketon-rac-glycerin)-oxy-2-oxo-1,3,2-oxaza-phospholan
(aus der Reaktion von 1,2-Dipentadecylketon-rac-glycerin-3-phosphorsäuredichlorid mit Äthanolamin); $C_{36}H_{72}NO_5P$ (629,96)

berechnet:
C 68,64 H 11,52 N 2,22 P 4,92%
gefunden:
C 68,44 H 11,48 N 2,21 P 4,82%

80. 2-(1',3'-Benzyliden-rac-glycerin)-oxy-2-oxo-1,3,2-oxaza-phospholan
(aus der Reaktion von 1,3-Benzyliden-glycerin-2-phosphorsäuredichlorid mit Äthanolamin); $C_{12}H_{16}NO_5P$ (285,02)
Nachweis durch Dünnschichtchromatographie!

81. 2-(1'-Trityl-3'-hexadecyl-rac-glycerin)-oxy-2-oxo-1,3,2-oxaza-phospholan
(aus der Reaktion von 1-Trityl-3-hexadecyl-glycerin-2-phosphorsäuredichlorid mit Äthanolamin); $C_{40}H_{58}NO_5P$ (663,89)
Nachweis durch Dünnschichtchromatographie!

Nach II)

82. 2-(1',2'-Isopropyliden-rac-glycerin)-oxy-2-oxo-1,3,2-diaza-phospholan
(aus der Reaktion von 1,2-Isopropyliden-rac-glycerin-3-phosphorsäuredichlorid mit Diaminoäthan); $C_8H_{17}NO_4P$ (236,22)
Nachweis durch Dünnschichtchromatographie!

83. 2-(1',2'-Dipentadecylketon-rac-glycerin-oxy-2-oxo-1,3,2-diaza-phospholan
(aus der Reaktion von 1,2-Dipentadecylketon-rac-glycerin-3-phosphorsäuredichlorid mit Diaminoäthan); $C_{36}H_{71}O_6P$ (630,71)
Nachweis durch Dünnschichtchromatographie!

Nach III)

84. 2-(1',2'-Isopropyliden-rac-glycerin)-oxy-2-oxo-1,3,2-dioxa-phospholan
(aus der Reaktion von 1,2-Isopropyliden-glycerin-3-phosphorsäuredichlorid mit Glykol); $C_8H_{15}O_6P$ (238,18)
Nachweis durch Dünnschichtchromatographie!

85. 2-(1',2'-Hexadecyliden-rac-glycerin)-oxy-2-oxo-1,3,2-dioxa-phospholan
(aus der Reaktion von 1,2-Hexadecyliden-rac-glycerin-3-phosphorsäuredichlorid mit Glykol); $C_{21}H_{41}O_6P$ (420,53)
Nachweis durch Dünnschichtchromatographie!

86. 2-(1',2'-Dipentadecylketon-rac-glycerin)-oxy-2-oxo-1,3,2-dioxa-phospholan
(aus der Reaktion von 1,2-Dipentadecylketon-rac-glycerin-3-phosphorsäuredichlorid mit Glykol); $C_{36}H_{71}O_6P$ (630,94)
Nachweis durch Dünnschichtchromatographie!

87. 2-(1',3'-Benzyliden-rac-glycerin)-oxy-2-oxo-1,3,2-dioxa-phospholan
(aus der Reaktion von 1,3-Benzyliden-glycerin-3-phosphorsäuredichlorid mit Glykol); $C_{12}H_{15}O_6P$ (286,23)
Nachweis durch Dünnschichtchromatographie!

Gruppe G

Besondere Vorsichtsmassnahmen müssen nur beachtet werden, wenn sich ein sekundärer Ester in direkter Nachbarschaft einer primären Alkoholgruppe befindet. In diesem Fall wird auf den Phosphorylierungsschritt nach der Reaktion VI, Gruppe E, verwiesen.

Nach I)

88. 2-(1'-Benzyl-2'-lauroyl-rac-glycerin)-oxy-2-oxo-1,3,2-oxaza-phospholan
(aus der Reaktion von 1-Benzyl-2-lauroyl-rac-glycerin-3-phosphorsäuredichlorid mit Äthanolamin);
$C_{24}H_{40}NO_6P$ (469,57)
berechnet:
C 61,39 H 8,59 N 2,98 P 6,60%
gefunden:
C 60,99 H 8,54 N 2,82 P 6,40%

89. 2-(1'-Dodecyl-2'-benzyl-rac-glycerin)-oxy-2-oxo-1,3,2-oxaza-phospholan
(aus der Reaktion von 1-Dodecyl-2-benzyl-rac-glycerin-3-phosphorsäuredichlorid mit Äthanolamin);
$C_{24}H_{42}NO_5P$ (455,58)
Nachweis durch Dünnschichtchromatographie!

90. 2-(1'-Äthyl-2'-benzyl-rac-glycerin)-oxy-2-oxo-1,3,2-oxaza-phospholan
(aus der Reaktion von 1-Äthyl-2-benzyl-rac-glycerin-3-phosphorsäuredichlorid mit Äthanolamin);
$C_{14}H_{22}NO_5P$ (315,31)
berechnet:
C 53,33 H 7,03 N 4,44 P 9,82%
gefunden:
C 53,01 H 7,06 N 4,31 P 9,74%

91. 2-(1'-Arachoyl-2'-benzyl-rac-glycerin)-oxy-2-oxo-1,3,2-oxaza-phospholan
(aus der Reaktion von 1-Arachoyl-2-benzyl-rac-glycerin-3-phosphorsäuredichlorid mit Äthanolamin);
$C_{32}H_{56}NO_6P$ (581,78)
Nachweis durch Dünnschichtchromatographie!

92. 2-(1'-Eicosyl-2'-benzyl-rac-glycerin)-oxy-2-oxo-1,3,2-oxaza-phospholan
(aus der Reaktion von 1-Eicosyl-2-benzyl-rac-glycerin-3-phosphorsäuredichlorid mit Äthanolamin);
$C_{32}H_{58}NO_5P$ (565,80)
Nachweis durch Dünnschichtchromatographie!

93. 2-(1'-Palmitoyl-2'-benzyl-rac-glycerin)-oxy-2-oxo-1,3,2-oxaza-phospholan
(aus der Reaktion von 1-Palmitoyl-2-benzyl-rac-glycerin-3-phosphorsäuredichlorid mit Äthanolamin);
$C_{28}H_{48}NO_6P$ (525,68)
Nachweis durch Dünnschichtchromatographie!

94. 2-(1'-Arachoyl-2'-benzyl-rac-glycerin)-oxy-2-oxo-1,3,2-oxaza-phosphorinan
(aus der Reaktion von 1-Arachoyl-2-benzyl-rac-glycerin-3-phosphorsäuredichlorid mit 3-Aminopropanol);
$C_{33}H_{58}NO_6P$ (595,81)
berechnet:
C 66,53 H 9,81 N 2,35 P 5,20%
gefunden:
C 66,31 H 9,77 N 2,28 P 5,08%

95. 2-(1'-Palmitoyl-2'-benzyl-rac-glycerin)-oxy-2-oxo-1,3,2-oxaza-phosphorinan
(aus der Reaktion von 1-Palmitoyl-2-benzyl-rac-glycerin-3-phosphorsäuredichlorid mit 3-Aminopropanol);
$C_{29}H_{50}NO_6P$ (539,70)
Nachweis durch Dünnschichtchromatographie!

Nach II)

96. 2-(1'-Benzyl-2'-lauroyl-rac-glycerin)-oxy-2-oxo-1,3,2-diaza-phospholan
(aus der Reaktion von 1-Benzyl-2-lauroyl-rac-glycerin-3-phosphorsäuredichlorid mit Diaminoäthan);
$C_{24}H_{41}N_2O_5P$ (468,58)
Nachweis durch Dünnschichtchromatographie!

97. 2-(1'-Dodecyl-2'-benzyl-rac-glycerin)-oxy-2-oxo-1,3,2-diaza-phospholan
(aus der Reaktion von 1-Dodecyl-2-benzyl-rac-glycerin-3-phosphorsäuredichlorid mit Diaminoäthan);
$C_{24}H_{43}N_2O_4P$ (454,60)
Nachweis durch Dünnschichtchromatographie!

98. 2-(1'-Äthyl-2'-benzyl-rac-glycerin)-oxy-2-oxo-1,3,2-diaza-phospholan
(aus der Reaktion von 1-Äthyl-2-benzyl-rac-glycerin-3-phosphorsäuredichlorid mit Diaminoäthan);
$C_{14}H_{23}N_2O_4P$ (314,33)
Nachweis durch Dünnschichtchromatographie!

99. 2-(1'-Arachoyl-2'-benzyl-rac-glycerin)-oxy-2-oxo-1,3,2-diaza-phospholan
(aus der Reaktion von 1-Arachoyl-2-benzyl-rac-glycerin-3-phosphorsäuredichlorid mit Diaminoäthan);
$C_{32}H_{57}N_2O_5P$ (580,80)
Nachweis durch Dünnschichtchromatographie!

100. 2-(1'-Eicosyl-2'-benzyl-rac-glycerin)-oxy-2-oxo-1,3,2-diaza-phospholan
(aus der Reaktion von 1-Eicosyl-2-benzyl-rac-glycerin-3-phosphorsäuredichlorid mit Diaminoäthan);
$C_{32}H_{57}N_2O_5P$ (564,80)
Nachweis durch Dünnschichtchromatographie!

101. 2-(1'-Palmitoyl-2'-benzyl-rac-glycerin)-oxy-2-oxo-1,3,2-diaza-phospholan
(aus der Reaktion von 1-Palmitoyl-2-benzyl-rac-glycerin-3-phosphorsäuredichlorid mit Diaminoäthan);
$C_{28}H_{49}N_2O_5P$ (524,70)
Nachweis durch Dünnschichtchromatographie!

Nach III)

102. 2-(1'-Benzyl-2'-lauroyl-rac-glycerin)-oxy-2-oxo-1,3,2-dioxa-phospholan
(aus der Reaktion von 1-Benzyl-2-lauroyl-rac-glycerin-3-phosphorsäuredichlorid mit Glykol);
$C_{24}H_{39}O_7P$ (470,55)
berechnet:
C 61,26 H 8,36 P 6,58%
gefunden:
C 61,01 H 8,29 P 6,42%

103. 2-(1'-Dodecyl-2'-benzyl-rac-glycerin)-oxy-2-oxo-1,3,2-dioxa-phospholan
(aus der Reaktion von 1-Dodecyl-2-benzyl-rac-glycerin-3-phosphorsäuredichlorid mit Glykol);
$C_{24}H_{41}O_6P$ (456,56)
Nachweis durch Dünnschichtchromatographie!

104. 2-(1'-Äthyl-2'-benzyl-rac-glycerin)-oxy-2-oxo-1,3,2-dioxa-phospholan
(aus der Reaktion von 1-Äthyl-2-benzyl-rac-glycerin-3-phosphorsäuredichlorid mit Glykol);
$C_{14}H_{31}O_6P$ (316,29)
Nachweis durch Dünnschichtchromatographie!

105. 2-(1'-Arachoyl-2'-benzyl-rac-glycerin)-oxy-2-oxo-1,3,2-dioxa-phospholan
(aus der Reaktion von 1-Arachoyl-2-benzyl-rac-

glycerin-3-phosphorsäuredichlorid mit Glykol); $C_{32}H_{55}O_7P$ (582,76) Nachweis durch Dünnschichtchromatographie!

106. 2-(1'-Eicosyl-2'-benzyl-rac-glycerin)-oxy-2-oxo-1,3,2-dioxa-phospholan (aus der Reaktion von 1-Eicosyl-2-benzyl-rac-glycerin-3-phosphorsäuredichlorid mit Glykol); $C_{32}H_{57}O_6P$ (566,78) Nachweis durch Dünnschichtchromatographie!

107. 2-(1'-Palmitoyl-2'-benzyl-rac-glycerin)-2-oxo-1,3,2-dioxa-phospholan (aus der Reaktion von 1-Palmitoyl-2-benzyl-rac-glycerin-3-phosphorsäuredichlorid mit Glykol); $C_{28}H_{47}O_7P$ (526,65) Nachweis durch Dünnschichtchromatographie!

108. 2-(1'-Arachoyl-2'-benzyl-rac-glycerin)-oxy-2-oxo-1,3,2-oxaza-phosphorinan [aus der Reaktion von 1-Arachoyl-2-benzyl-rac-glycerin-3-phosphorsäuredichlorid mit Propandiol-(1,3)]; $C_{33}H_{57}O_7P$ (526,65) Nachweis durch Dünnschichtchromatographie!

109. 2-(1'-Palmitoyl-2'-benzyl-rac-glycerin)-oxy-2-oxo-1,3,2-oxaza-phosphorinan [aus der Reaktion von 1-Palmitoyl-2-benzyl-rac-glycerin-2-phosphorsäuredichlorid mit Propandiol-(1,3)]; $C_{29}H_{49}O_7P$ (540,68) Nachweis durch Dünnschichtchromatographie!

Gruppe H bis J

Bei besonderen Strukturmerkmalen, wie primären Alkoholfunktionen neben sekundären Fettsäureestern oder bei säurelabilen Schutzgruppen, müssen die Vorsichtsmassnahmen beachtet werden, auf die in den Reaktionen IV bis VI hingewiesen wurde.

Nach I)

110. 2-(1',2',3'-Trimyristoyl-erythrit)-oxy-2-oxo-1,3,2-oxaza-phospholan (aus der Reaktion von 1,2,3-Trimyristoyl-erythrit-phosphorsäuredichlorid mit Äthanolamin); $C_{48}H_{92}NO_9P$ (858,25)

berechnet:

C 67,18 H 10,81 N 1,63 P 3,61%

gefunden:

C 67,09 H 10,75 N 1,51 P 3,57%

111. 2-(1',2',3'-Trimyristoyl-erythrit)-oxy-2-oxo-1,3,2-oxaza-phosphorinan (aus der Reaktion von 1,2,3-Trimyristoyl-erythrit-phosphorsäuredichlorid mit 3-Aminopropanol); $C_{49}H_{94}NO_9P$ (872,27) Nachweis durch Dünnschichtchromatographie!

112. 2-(1',2',3'-Trimyristoyl-erythrit)-oxy-2-oxo-1,3,2-oxaza-phosphorepan (aus der Reaktion von 1,2,3-Trimyristoyl-erythrit-phosphorsäuredichlorid mit 4-Aminopropanol); $C_{50}H_{96}NO_9P$ (886,30) Nachweis durch Dünnschichtchromatographie!

113. 2-(1',2'-Isopropyliden-3'-palmitoyl-erythrit)-oxy-2-oxo-1,3,2-oxaza-phospholan (aus der Reaktion von 1,2-Isopropyliden-3-palmitoyl-erythrit-phosphorsäuredichlorid mit Äthanolamin); $C_{25}H_{48}NO_7P$ (505,65) Nachweis durch Dünnschichtchromatographie!

114. 2-(1',2',3',4',5'-Pentamyristoyl-D-mannit)-oxy-2-oxo-1,3,2-oxaza-phospholan (aus der Reaktion von 1,2,3,4,5-Pentamyristoyl-D-mannit-6-phosphorsäuredichlorid mit Äthanolamin); $C_{78}H_{148}NO_{13}P$ (1339,03) Nachweis durch Dünnschichtchromatographie!

115. 2-(1',2',3',4',5'-Pentalauroyl-D-mannit)-oxy-2-oxo-1,3,2-oxaza-phospholan (aus der Reaktion von 1,2,3,4,5-Pentalauroyl-D-mannit-6-phosphorsäuredichlorid mit Äthanolamin); $C_{68}H_{128}NO_{13}P$ (1198,76) Nachweis durch Dünnschichtchromatographie!

Nach II)

116. 2-(1',2',3'-Trimyristoyl-erythrit)-oxy-2-oxo-1,3,2-diaza-phospholan (aus der Reaktion von 1,2,3-Trimyristoyl-erythrit-phosphorsäuredichlorid mit Diaminoäthan); $C_{48}H_{93}N_2O_8P$ (857,27)

berechnet:

C 67,10 H 10,91 N 3,26 P 3,61%

gefunden:

C 66,81 H 10,85 N 3,17 P 3,44%

117. 2-(1',2',3'-Trimyristoyl-erythrit)-oxy-2-oxo-1,3,2-diaza-phosphorinan (aus der Reaktion von 1,2,3-Trimyristoyl-erythrit-phosphorsäuredichlorid mit 1,3-Diaminopropan); $C_{49}H_{95}N_2O_8P$ (871,29) Nachweis durch Dünnschichtchromatographie!

118. 2-(1',2'-Isopropyliden-3'-palmitoyl-erythrit)-oxy-2-oxo-1,3,2-diaza-phospholan (aus der Reaktion von 1,2-Isopropyliden-3-palmitoyl-erythrit-phosphorsäuredichlorid mit Diaminoäthan); $C_{25}H_{49}N_2O_6P$ (504,67) Nachweis durch Dünnschichtchromatographie!

119. 2-(1',2',3',4',5'-Pentamyristoyl-D-mannit)-oxy-2-oxo-1,3,2-diaza-phospholan (aus der Reaktion von 1,2,3,4,5-Pentamyristoyl-D-mannit-phosphorsäuredichlorid mit Diaminoäthan); $C_{78}H_{149}N_2O_{12}P$ (1348,05) Nachweis durch Dünnschichtchromatographie!

Nach III)

120. 2-(1',2',3'-Trimyristoyl-erythrit)-oxy-2-oxo-1,3,2-dioxa-phospholan (aus der Reaktion von 1,2,3-Trimyristoyl-erythrit-phosphorsäuredichlorid mit Glykol); $C_{48}H_{91}O_{10}P$ (859,23) Nachweis durch Dünnschichtchromatographie!

121. 2-(1',2',3'-Trimyristoyl-erythrit)-oxy-2-oxo-1,3,2-dioxa-phosphorinan [aus der Reaktion von 1,2,3-Trimyristoyl-erythrit-phosphorsäuredichlorid mit Propandiol-(1,3)]; $C_{49}H_{93}O_{10}P$ (873,25) Nachweis durch Dünnschichtchromatographie!

122. 2-(1',2'-Isopropyliden-3'-palmitoyl-erythrit)-oxy-2-oxo-1,3,2-dioxa-phospholan (aus der Reaktion von 1,2-Isopropyliden-3-palmitoyl-erythrit-phosphorsäuredichlorid mit Glykol);
$C_{25}H_{47}O_8P$ (506,63)
Nachweis durch Dünnschichtchromatographie!

123. 2-(1',2',3',4',5'-Pentamyristoyl-D-mannit)-oxy-2-oxo-1,3,2-dioxa-phospholan
(aus der Reaktion von 1,2,3,4,5-Pentamyristoyl-D-mannit-phosphorsäuredichlorid mit Glykol);
$C_{78}H_{147}O_{14}P$ (1340,01)
Nachweis durch Dünnschichtchromatographie!

Gruppe K
Nach I)

124. 2-(Retinol)-oxy-oxo-1,3,2-oxaza-phospholan
(aus der Reaktion von Retinol-phosphorsäuredichlorid mit Äthanolamin);
$C_{22}H_{34}NO_3P$ (391,50)
berechnet:
C 67,50 H 8,75 N 3,58 P 7,91%
gefunden:
C 67,30 H 8,40 N 3,39 P 7,61%

125. 2-(Cholesterin)-oxy-2-oxo-1,3,2-oxaza-phospholan
(aus der Reaktion von Cholesterin-phosphorsäuredichlorid mit Äthanolamin);
$C_{29}H_{50}NO_3P$ (491,70)
berechnet:
C 70,84 H 10,25 N 2,85 P 6,30%
gefunden:
C 70,12 H 10,13 N 2,71 P 6,11%

126. 2-(Ergosterin)-oxy-2-oxo-1,3,2-oxaza-phospholan
(aus der Reaktion von Ergosterin-phosphorsäuredichlorid mit Äthanolamin);
$C_{30}H_{48}NO_3P$ (501,70)
Nachweis durch Dünnschichtchromatographie!

127. 2-(Androsteron)-oxy-2-oxo-1,3,2-oxaza-phospholan
(aus der Reaktion von Androsteron-phosphorsäuredichlorid mit Äthanolamin);
$C_{21}H_{34}NO_3P$ (379,49)
Nachweis durch Dünnschichtchromatographie!

Nach II)

128. 2-(Retinol)-oxy-2-oxo-1,3,2-dioxa-phospholan
(aus der Reaktion von Retinol-phosphorsäuredichlorid mit Glykol);
$C_{22}H_{33}O_4P$ (392,48)
Nachweis durch Dünnschichtchromatographie!

129. 2-(Cholesterin)-oxy-2-oxo-1,3,2-dioxa-phospholan
(aus der Reaktion von Cholesterin-phosphorsäuredichlorid mit Glykol);
$C_{29}H_{49}O_4P$ (492,68)
Nachweis durch Dünnschichtchromatographie!

130. 2-(Ergosterin)-oxy-2-oxo-1,3,2-dioxa-phospholan
(aus der Reaktion von Ergosterin-phosphorsäuredichlorid mit Glykol);
$C_{30}H_{47}O_4P$ (502,68)
Nachweis durch Dünnschichtchromatographie!

131. 2-(Androsteron)-oxa-2-oxo-1,3,2-dioxa-phospholan
(aus der Reaktion von Androsteron-phosphorsäuredichlorid mit Glykol);
$C_{21}H_{33}O_4P$ (380,47)
Nachweis durch Dünnschichtchromatographie!

Hydrolytische Ringspaltung der Verbindungen von Formel I

Verfahren VIII (saure Spaltung)

Die Ringverbindung von Beispiel 46 (6 g oder 0,01 Mol) wird in 100 ml 2-Propanol bei 50°C gelöst. Man kühlt auf Raumtemperatur und versetzt mit 50 ml 1 n HCl. Nach 10 Minuten fällt reiner
1,2-Dimyristoyl-sn-glycerin-3-phosphorsäure-äthanolamin-ester (Kephalin)
aus. Die Ausbeuten sind quantitativ, es entstehen keine Nebenprodukte.

Die Spaltung kann entsprechend mit 0,1n HCl, 2 n Ameisensäure, 0,3 m oder 1 m Borsäure durchgeführt werden. Bei geringeren Protonenkonzentrationen sind die Reaktionszeiten etwas länger. Es entsteht aber immer ein eindeutiges Produkt, ein Phosphoryläthanolamin, wie NMRspektroskopische Untersuchungen gezeigt haben.

Bei sehr kurzkettigen Vertretern (R<16) wird häufig beobachtet, dass die Produkte nicht ausfallen. Es kann dann so verfahren werden, dass man das Reaktionsprodukt mit Chloroform extrahiert oder Ameisensäure zur Spaltung verwendet und nach der Spaltung die Lösungsmittel im Vakuum abzieht.

Verfahren IX (saure Spaltung von Phosphorinan [6-Ring])

Die Ringverbindung aus Beispiel 48 (7 g oder 0,01 Mol) wird in 100 ml Tetrahydrofuran gelöst und mit 50 ml 2 M Ameisensäure versetzt. Unter Rühren ist die Hydrolyse nach 24 Stunden abgeschlossen. Man saugt die Kristalle ab und wäscht mit Diäthyläther nach. Die Ausbeuten an reinem
1,2-Dipalmitoyl-sn-glycerin-3-phosphorsäure-propanolamin-ester (Kephalin)
sind quantitativ.

Verfahren X (basische Spaltung)

Man verfährt wie in Verfahren VIII, arbeitet jedoch in Gegenwart von Hydroxylionen. Allerdings fallen hier die Reaktionsprodukte nicht direkt aus, sondern müssen noch mit Chloroform extrahiert werden. Die Verbindung von Beispiel 46 (6 g oder 0,1 Mol) wird in 100 ml 2-Propanol bei 50°C gelöst. Man kühlt auf Raumtemperatur und versetzt mit 50 ml 0,5 m Natriumcarbonat. Die Spaltung ist nach etwa 30 Minuten beendet. Das Reaktionsprodukt wird mit Chloroform extrahiert, eingeengt, der Rückstand in 50 ml Chloroform aufgenommen und mit 500 ml Aceton gefällt. Die Ausbeuten sind quantitativ, es entstehen keine Nebenprodukte. Es entsteht ein eindeutiges Produkt, das durch Ringöffnung am Sauerstoffatom entstanden ist (Nachweis durch NMR-Spektroskopie).

Verfahren XI
(Öffnung von O,O-Ringen mit Natriumhalogeniden)

Die Verbindung aus Beispiel 64 (6,2 g oder 0,01 Mol) wird in 50 ml Äthylmethylketon gelöst und

nach Zusatz von 3 g NaJ (0,02 Mol) unter Rückfluss gekocht. Dünnschichtchromatographisch zeigt sich, dass die Reaktion nach 30 Minuten beendet ist. Man entfernt das Lösungsmittel im Vakuum, nimmt in Wasser auf und extrahiert mit Chloroform. Das Produkt,

1,2-Dimyristoyl-sn-glycerin-3-phosphorsäure-β-jodäthyl-ester,

kann durch Zusatz von Aceton ausgefällt werden. Dies ist ein neuer Weg zur Synthese von Halogenäthylestern von Phosphatidsäuren, die wertvolle Zwischenprodukte in der Synthese von Phospholipiden sind (siehe dazu DE-OS 2 345 057.9, DE-OS 2 345 059.1, DE-OS 2 345 060.4 und DE-OS 2 437 832.3.

Auf entsprechende Weise können mit NaBr die Bromalkylester erhalten werden.

**Patentansprüche**

1. Verbindungen der Formel

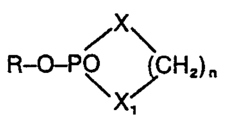

(I)

worin

R den Rest eines ein- oder mehrwertigen, primären oder sekundären aliphatischen Alkohols bedeutet, welcher halogeniert sein kann oder/und eine oder mehrere aliphatische Ester- oder Äthergruppen mit 1 bis 26 C-Atomen in der Seitenkette aufweist, die auch Kohlenstoff-Kohlenstoff-Mehrfachverbindungen enthalten können, wobei der Rest R insgesamt wenigstens 6 C-Atome enthält, wenn er sich von einem einwertigen Alkohol ableitet, und wenigstens 3 C-Atome, wenn er sich von einem mehrwertigen Alkohol ableitet,

X und $X_1$ unabhängig voneinander je ein Sauerstoffatom, die Gruppe NH oder N-Niedrigalkyl mit 1 bis 6 C-Atomen, wobei X und $X_1$ nicht gleichzeitig Sauerstoffatome darstellen, und

n die Zahl 2, 3 oder 4 bedeuten.

2. Verfahren zur Herstellung einer Verbindung nach Anspruch 1, dadurch gekennzeichnet, dass eine Verbindung der Formel

$$R{-}O{-}POCl_2 \qquad (II)$$

worin R die in Anspruch 1 angegebene Bedeutung besitzt, aber keine freien OH-Gruppen aufweist, mit einer Verbindung der Formel

$$R''X{-}(CH_2)_n{-}X_1{-}R'' \qquad (III)$$

in der X und $X_1$ die in Anspruch 1 angegebene Bedeutung besitzen und jede Gruppe R'', jeweils ein Wasserstoffatom oder, wenn X bzw. $X_1$ nicht Sauerstoff sind, auch einen Alkylrest mit 1 bis 6 C-Atomen bedeuten kann, umgesetzt wird.

3. Verfahren nach Anspruch 2, dadurch gekennzeichnet, dass die Umsetzung in einem organischen Lösungsmittel durchgeführt wird.

4. Verfahren nach Anspruch 2, dadurch gekennzeichnet, dass als Lösungsmittel Tetrahydrofuran, Dioxan, Trichloräthylen oder Chloroform verwendet werden.

5. Verfahren nach Anspruch 3 oder 4, dadurch gekennzeichnet, dass die Umsetzung in Gegenwart eines basischen Amins als Katalysator durchgeführt wird.

6. Verfahren nach Anspruch 5, dadurch gekennzeichnet, dass als Katalysator ein Trialkylamin mit 1 bis 4 C-Atomen je Alkylgruppe verwendet wird.

7. Verfahren nach einem der Ansprüche 2 bis 6, dadurch gekennzeichnet, dass die Umsetzung zwischen −10 und +50°C durchgeführt wird.

8. Verwendung einer Verbindung nach Anspruch 1 zur Herstellung von Kephalinen und kephalinanalogen Verbindungen durch hydrolytische Ringspaltung unter Katalyse mit Protonen oder Hydroxylionen.

**Claims**

1. Compounds of the formula:

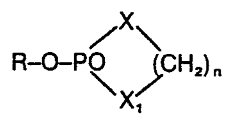

(I)

wherein R signifies the residue of a mono- or polyhydroxy, primary or secondary aliphatic alcohol, which can be halogenated and/or contain one or more aliphatic ester or ether groups with 1 to 26 C-atoms in the side chain, which can also contain carbon-carbon multiple bonds, whereby the residue R contains altogether at least 6 C-atoms when it is derived from a monohydroxy alcohol and at least 3 C-atoms when it is derived from a polyhydroxy alcohol, X and $X_1$, independently of one another, each signify an oxygen atom, the NH group or N-lower alkyl with 1 to 6 C-atoms, whereby X and $X_1$ do not simultaneously represent oxygen atoms, and n means the number 2, 3 or 4.

2. Process for the preparation of a compound according to claim 1, characterised in that a compound of the formula:

$$R{-}O{-}POCl_2 \qquad (II)$$

wherein R possesses the meaning given in claim 1, but has no free OH groups, is reacted with a compound of the formula:

$$R''X{-}(CH_2)_n{-}X_1{-}R'' \qquad (III)$$

in which X and $X_1$ possess the meaning given in claim 1 and each R'' group can signify a hydrogen atom or, if X or $X_1$ are not oxygen, also an alkyl radical with 1 to 6 C-atoms.

3. Process according to claim 2, characterised in that the reaction is carried out in an organic solvent.

4. Process according to claim 2, characterised in that tetrahydrofuran, dioxan, trichloroethylene or chloroform are used as solvents.

5. Process according to claim 3 or 4, characterised in that the reaction is carried out in

the presence of a basic amine as catalyst.

6. Process according to claim 5, characterised in that a trialkylamine with 1 to 4 C-atoms in each alkyl group is employed as catalyst.

7. Process according to one of claims 2 to 6, characterised in that the reaction is carried out between −10 and +50°C.

8. Use of a compound according to claim 1 for the preparation of cephalins and cephaline-analogous compounds by hydrolytic ring fission, catalysed by protons or hydroxyl ions.

**Revendications**

1. Composés de formule

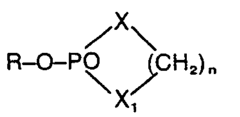

(I)

dans laquelle

R représente le reste d'un alcool aliphatique mono- ou polyvalent, primaire ou secondaire, qui peut être halogéné et/ou porte dans la chaîne latérale un ou plusieurs groupes esters ou éthers aliphatiques avec 1 à 26 atomes de C qui peuvent également contenir des liaisons multiples carbone-carbone, le reste R contenant au total au moins 6 atomes de carbone lorsqu'il dérive d'un alcool monovalent, et au moins 3 atomes de carbone lorsqu'il dérive d'un alcool polyvalent.

X et $X_1$ représentent chacun, indépendamment l'un de l'autre, un atome d'oxygène, le groupe NH ou N-alcoyle inférieur avec 1 à 6 atomes de C, X et $X_1$ ne représentant pas simultanément l'oxygène, et

n représente le nombre 2, 3 ou 4.

2. Procédé de préparation d'un composé selon la revendication 1, caractérisé en ce que l'on fait réagir un composé de formule

$$R\text{–}O\text{–}POCl_2 \quad (II)$$

dans laquelle R a la signification indiquée dans la revendication 1, mais ne présente pas de groupe OH libre, avec un composé de formule

$$R''X\text{–}(CH_2)_n\text{–}X_1\text{–}R'' \quad (III)$$

dans laquelle X et $X_1$ ont les significations indiquées à la revendication 1 et chacun des symboles R″ représente un atome d'hydrogène ou bien, lorsque X ou $X_1$ respectivement ne représente pas l'oxygène, également un groupe alcoyle avec 1 à 6 atomes de carbone.

3. Procédé selon la revendication 2, caractérisé en ce que la réaction est effectuée dans un solvant organique.

4. Procédé selon la revendication 2, caractérisé en ce que le solvant utilisé est le tétrahydrofuranne, le dioxanne, le trichloréthylène ou le chloroforme.

5. Procédé selon la revendication 3 ou 4, caractérisé en ce que la réaction est effectuée en présence d'une amine basique en tant que catalyseur.

6. Procédé selon la revendication 5, caractérisé en ce que l'on utilise en tant que catalyseur une trialcoylamine avec 1 à 4 atomes de carbone dans chacun des groupes alcoyles.

7. Procédé selon l'une des revendications 2 à 6, caractérisé en ce que la réaction est effectuée entre −10 et +50°C.

8. Utilisation d'un composé selon la revendication 1 pour la préparation des céphalines et de composés analogues aux céphalines par ouverture hydrolytique du cycle, catalysée par des protons ou des ions hydroxyles.